# EUROPEAN PATENT APPLICATION

(11) **EP 4 607 989 A1**
(43) Date of publication of application: **27.08.2025**
(21) Application number: 25156248.4
(22) Date of filing: 06.02.2025
(51) Int. Cl.: H04W 16/14, H04W 48/00

(54) **PROGRAMMABLE NETWORK SLICING FRAMEWORK FOR CELLULAR SYSTEMS**

(30) Priority: 22.02.2024 FI 20245223
(71) Applicant: Nokia Solutions and Networks Oy, 02610 Espoo (FI)
(72) Inventor: KAK, Ahan, Summit, NJ, 07901 (US); PHAM VAN, Quan, Murray Hill, NJ, 07974-0636 (US); THIEU, Huu Trung, Chatham, NJ, 07928 (US); CHOI, Nakjung, Florham Park, NJ, 07932 (US)
(74) Representative: Nokia EPO representatives

(57) **Abstract**

Various example embodiments of the programmable network slicing framework may be configured to support programmable network slicing in a radio access network (RAN) portion of a cellular communication system based on a programmable RAN slicing framework. Various example embodiments of the programmable RAN slicing framework may be configured to support programmable network slicing in a RAN based on use of a set of RAN slices having associated therewith network slice operational states and associated network slice configurations which may be used for assignment of RAN resources to user equipments (UEs) of the RAN, based on use of a frequency domain scheduling capability to assign frequency domain resources of RAN slices to UEs of the RAN based on network slice operational states and network slice configurations of the RAN slices, based on use of various types of messaging to support various aspects of RAN slicing, and so forth.

## Description

### TECHNICAL FIELD

Various example embodiments relate generally to communication systems and, more particularly but not exclusively, to network slicing in cellular communication systems.

### BACKGROUND

Various communications technologies may be used to support communications in various types of communication systems.

### SUMMARY

In at least some example embodiments, an apparatus includes at least one processor and at least one memory storing instructions which, when executed by the at least one processor, cause the apparatus at least to exchange, by a base station of a radio access network with a controller of the radio access network, messages related to configuration of a set of network slices on the base station, maintain, by the base station, network slice configuration information for the set of network slices, wherein the network slice configuration information includes, for each network slice in the set of network slices, a respective set of network slice parameters for the respective network slice that includes an operational state of the respective network slice, a radio resource configuration of the respective network slice that is based on the operational state of the respective network slice, and a slice-specific scheduling algorithm of the respective network slice, and perform, by the base station based on the network slice configuration information for the set of network slices, slice-aware allocation of frequency domain resources of the radio access network to a set of user equipments associated with the base station. In at least some example embodiments, the instructions, when executed by the at least one processor, cause the apparatus at least to support, by the base station for at least one of the network slices based on one or more control messages from the controller, configuration of the respective set of network slice parameters for the network slice to meet a set of requirements of a use case served by the radio access network. In at least some example embodiments, the operational state of the respective network slice is based on a set of operational states supported for the set of network slices, wherein the set of operational states includes an idle state, a dedicated state, a prioritized state, a shared state, and a hybrid state. **In** at least some example embodiments, the radio resource configuration of the respective network slice is based on the operational state of the respective network slice, wherein the respective network slice is in the dedicated state and the radio resource configuration includes an indication of a quantity of radio resources dedicated to the respective network slice, the respective network slice is in the prioritized state and the radio resource configuration includes an indication of a quantity of radio resources to which the respective network slice has priority access, the respective network slice is in the shared state and the radio resource configuration includes an indication of a shared priority parameter indicative of a priority level of the respective network slice for access to a shared pool of radio resources, the respective network slice is in the hybrid state and the radio resource configuration includes a dedicated radio resource configuration indicative of a quantity of radio resources dedicated to the respective network slice, a prioritized radio resource configuration indicative of a quantity of radio resources to which the respective network slice has priority access, and a shared priority parameter indicative of a priority level of the respective network slice for access to a shared pool of radio resources. **In at** least some example embodiments, the slice-specific scheduling algorithm of the respective network slice includes one of a proportional fair scheduling algorithm, a round robin scheduling algorithm, or a maximum throughput scheduling algorithm. In at least some example embodiments, for each network slice in the set of network slices, the respective set of network slice parameters for the respective network slice further includes at least one of an indication of a radio access technology of the respective network slice or a set of radio access network level user plane associations for the respective network slice. In at least some example embodiments, for at least one of the network slices in the set of network slices, the operational state of the respective network slice is based on an event-driven network slice state machine supporting an idle state in which the respective network slice does not have any data radio bearers assigned thereto, a dedicated state in which the respective network slice has a set of dedicated radio resources assigned thereto, a prioritized state in which the respective network slice has priority access to a set of radio resources assigned to the respective network slice and unused ones of the radio resources assigned to the respective network slice are allocated to a shared pool of radio resources, a shared state in which the respective network slice does not have an explicit assignment of radio resources and has access to a shared pool of radio resources based on a priority of the respective network slice, and a hybrid state in which the respective network slice includes a dedicated radio resource configuration, a prioritized radio resource configuration, and a shared priority parameter. In at least some example embodiments, the slice-aware allocation of frequency domain resources of the radio access network to the set of user equipments of the radio access network is based on allocation of frequency domain resources to data radio bearers of the user equipments based on the respective operational states of the respective network slices, the respective radio resource configurations of the respective network slices, and the respective slice-specific scheduling algorithms of the respective network slices. In at least some example embodiments, the slice-aware allocation of frequency domain resources of the radio access network to the set of user equipments of the radio access network is based on a first scheduling stage, based on slice-specific scheduling of frequency domain resources to the user equipments, to provide a first resource allocation for the set of user equipments, a second scheduling stage, based on system-level scheduling of shared frequency domain resources to the user equipments, to provide a second resource allocation for the set of user equipments, and a third scheduling stage in which virtual resource blocks are assigned to data radio bearers of the user equipments based on the first resource allocation for the set of user equipments and the second resource allocation for the set of user equipments. In at least some example embodiments, to perform slice-aware allocation of frequency domain resources of the radio access network to the set of user equipments of the radio access network, the instructions, when executed by the at least one processor, cause the apparatus at least to determine, for each network slice in the set of network slices, a respective set of data radio bearers of the set of user equipments associated with the respective network slice, and determine, for each user equipment in the set of the user equipments based on slice-aware scheduling based on the set of network slices, a respective set of virtual resource blocks assigned to the respective user equipment. In at least some example embodiments, to determine, for each user equipment in the set of the user equipments based on slice-aware scheduling based on the set of network slices, the respective set of virtual resource blocks assigned to the respective user equipment, the instructions, when executed by the at least one processor, cause the apparatus at least to determine, for each network slice in a first subset of network slices that includes ones of the network slices in a dedicated state, a prioritized state, or a hybrid state, a first resource allocation indicative of a respective number of radio bearers to allocate to each data radio bearer associated with the respective network slice, determine, for each network slice in a second subset of network slices including ones of the network slices in the hybrid state or a shared state, a second resource allocation indicative of a number of radio bearers to allocate to each data radio bearer associated with the respective network slice, and determine, for each user equipment in the set of the user equipments based on the first resource allocation and the second resource allocation, allocation of the respective set of virtual resource blocks to the respective user equipment. In at least some example embodiments, the first resource allocation is determined based on respective slice-specific scheduling algorithms applied for the respective ones of the network slices in the first subset of network slices, wherein the second resource allocation is determined based on a system-level scheduling algorithm applied for the ones of the network slices in the second subset of network slices. In at least some example embodiments, to determine the first resource allocation, the instructions, when executed by the at least one processor, cause the apparatus at least to determine, for each network slice in the first subset of network slices based on the respective slice-specific scheduling algorithm of the respective network slice and the respective radio resource configuration of the respective network slice, the number of radio bearers to allocate to each data radio bearer associated with the respective network slice up to a maximum value for the respective network slice that is constrained by a sum of dedicated resources and prioritized resources associated with the respective network slice, and output a list of the data radio bearers of the user equipments having radio bearers assigned thereto along with the respective numbers of radio bearers allocated to the respective data radio bearers of the user equipments and a list of data radio bearers of the user equipments without any radio bearers assigned thereto. In at least some example embodiments, the slice-specific scheduling algorithm associated with the respective network slice includes one of a proportional fair scheduling algorithm, a round robin scheduling algorithm, or a maximum throughput scheduling algorithm. In at least some example embodiments, to determine the second resource allocation, the instructions, when executed by the at least one processor, cause the apparatus at least to determine, for each network slice in the second subset of slices based on a system-level scheduling algorithm and the respective radio resource configuration of the respective network slice, the number of radio bearers to allocate to each data radio bearer associated with the respective network slice up to a maximum value bounded by the resource availability within the shared resource pool, and output a list of the data radio bearers of the user equipments along with the respective numbers of radio bearers allocated to the respective data radio bearers of the user equipments. In at least some example embodiments, to determine, for each user equipment in the set of the user equipments based on the first resource allocation and the second resource allocation, allocation of the respective set of virtual resource blocks to the respective user equipment, the instructions, when executed by the at least one processor, cause the apparatus at least to determine, for each user equipment in the set of user equipments based on the first resource allocation and the second resource allocation, a respective number of radio bearers assigned to each data radio bearer of the respective user equipment, and assign, to each user equipment based on the respective number of radio bearers assigned to each data radio bearer of the respective user equipment, specific virtual resource blocks for use by each data radio bearer of the respective user equipment. In at least some example embodiments, the instructions, when executed by the at least one processor, cause the apparatus at least to support, by the base station based on a set of application programming interfaces, at least one of configuration of the network slices by the controller or collection of operating statistics of the network slices by the controller. In at least some example embodiments, the instructions, when executed by the at least one processor, cause the apparatus at least to support, by the base station, a set of services between the base station and the controller based on a set of message types. In at least some example embodiments, the set of services includes a set of report services and the set of report services includes at least one of a slice context report including configuration information and statistics data at the base station for one or more of the network slices, a user equipment context report including slice-related configuration information and statistics data at the base station for one or more of the user equipments, or a context change report for synchronizing slice-related context between the controller and the base station. In at least some example embodiments, the set of services includes a set of control services, wherein the set of control services includes at least one of a slice configuration service for configuring at least one of the network slice parameters for one or more of the network slices, or a user equipment configuration service for configuring user equipment specific slice parameters. In at least some example embodiments, the set of message types includes at least one of an indication message or a control message.

In at least some example embodiments, a non-transitory computer readable medium stores computer program instructions which, when executed by an apparatus, cause the apparatus at least to exchange, by a base station of a radio access network with a controller of the radio access network, messages related to configuration of a set of network slices on the base station, maintain, by the base station, network slice configuration information for the set of network slices, wherein the network slice configuration information includes, for each network slice in the set of network slices, a respective set of network slice parameters for the respective network slice that includes an operational state of the respective network slice, a radio resource configuration of the respective network slice that is based on the operational state of the respective network slice, and a slice-specific scheduling algorithm of the respective network slice, and perform, by the base station based on the network slice configuration information for the set of network slices, slice-aware allocation of frequency domain resources of the radio access network to a set of user equipments associated with the base station. In at least some example embodiments, the computer program instructions, when executed by the at least one apparatus, cause the apparatus at least to support, by the base station for at least one of the network slices based on one or more control messages from the controller, configuration of the respective set of network slice parameters for the network slice to meet a set of requirements of a use case served by the radio access network. In at least some example embodiments, the operational state of the respective network slice is based on a set of operational states supported for the set of network slices, wherein the set of operational states includes an idle state, a dedicated state, a prioritized state, a shared state, and a hybrid state. In at least some example embodiments, the radio resource configuration of the respective network slice is based on the operational state of the respective network slice, wherein the respective network slice is in the dedicated state and the radio resource configuration includes an indication of a quantity of radio resources dedicated to the respective network slice, the respective network slice is in the prioritized state and the radio resource configuration includes an indication of a quantity of radio resources to which the respective network slice has priority access, the respective network slice is in the shared state and the radio resource configuration includes an indication of a shared priority parameter indicative of a priority level of the respective network slice for access to a shared pool of radio resources, the respective network slice is in the hybrid state and the radio resource configuration includes a dedicated radio resource configuration indicative of a quantity of radio resources dedicated to the respective network slice, a prioritized radio resource configuration indicative of a quantity of radio resources to which the respective network slice has priority access, and a shared priority parameter indicative of a priority level of the respective network slice for access to a shared pool of radio resources. In at least some example embodiments, the slice-specific scheduling algorithm of the respective network slice includes one of a proportional fair scheduling algorithm, a round robin scheduling algorithm, or a maximum throughput scheduling algorithm. In at least some example embodiments, for each network slice in the set of network slices, the respective set of network slice parameters for the respective network slice further includes at least one of an indication of a radio access technology of the respective network slice or a set of radio access network level user plane associations for the respective network slice. In at least some example embodiments, for at least one of the network slices in the set of network slices, the operational state of the respective network slice is based on an event-driven network slice state machine supporting an idle state in which the respective network slice does not have any data radio bearers assigned thereto, a dedicated state in which the respective network slice has a set of dedicated radio resources assigned thereto, a prioritized state in which the respective network slice has priority access to a set of radio resources assigned to the respective network slice and unused ones of the radio resources assigned to the respective network slice are allocated to a shared pool of radio resources, a shared state in which the respective network slice does not have an explicit assignment of radio resources and has access to a shared pool of radio resources based on a priority of the respective network slice, and a hybrid state in which the respective network slice includes a dedicated radio resource configuration, a prioritized radio resource configuration, and a shared priority parameter. In at least some example embodiments, the slice-aware allocation of frequency domain resources of the radio access network to the set of user equipments of the radio access network is based on allocation of frequency domain resources to data radio bearers of the user equipments based on the respective operational states of the respective network slices, the respective radio resource configurations of the respective network slices, and the respective slice-specific scheduling algorithms of the respective network slices. In at least some example embodiments, the slice-aware allocation of frequency domain resources of the radio access network to the set of user equipments of the radio access network is based on a first scheduling stage, based on slice-specific scheduling of frequency domain resources to the user equipments, to provide a first resource allocation for the set of user equipments, a second scheduling stage, based on system-level scheduling of shared frequency domain resources to the user equipments, to provide a second resource allocation for the set of user equipments, and a third scheduling stage in which virtual resource blocks are assigned to data radio bearers of the user equipments based on the first resource allocation for the set of user equipments and the second resource allocation for the set of user equipments. In at least some example embodiments, to perform slice-aware allocation of frequency domain resources of the radio access network to the set of user equipments of the radio access network, the computer program instructions, when executed by the at least one apparatus, cause the apparatus at least to determine, for each network slice in the set of network slices, a respective set of data radio bearers of the set of user equipments associated with the respective network slice, and determine, for each user equipment in the set of the user equipments based on slice-aware scheduling based on the set of network slices, a respective set of virtual resource blocks assigned to the respective user equipment. In at least some example embodiments, to determine, for each user equipment in the set of the user equipments based on slice-aware scheduling based on the set of network slices, the respective set of virtual resource blocks assigned to the respective user equipment, the computer program instructions, when executed by the at least one apparatus, cause the apparatus at least to determine, for each network slice in a first subset of network slices that includes ones of the network slices in a dedicated state, a prioritized state, or a hybrid state, a first resource allocation indicative of a respective number of radio bearers to allocate to each data radio bearer associated with the respective network slice, determine, for each network slice in a second subset of network slices including ones of the network slices in the hybrid state or a shared state, a second resource allocation indicative of a number of radio bearers to allocate to each data radio bearer associated with the respective network slice, and determine, for each user equipment in the set of the user equipments based on the first resource allocation and the second resource allocation, allocation of the respective set of virtual resource blocks to the respective user equipment. In at least some example embodiments, the first resource allocation is determined based on respective slice-specific scheduling algorithms applied for the respective ones of the network slices in the first subset of network slices, wherein the second resource allocation is determined based on a system-level scheduling algorithm applied for the ones of the network slices in the second subset of network slices. In at least some example embodiments, to determine the first resource allocation, the computer program instructions, when executed by the at least one apparatus, cause the apparatus at least to determine, for each network slice in the first subset of network slices based on the respective slice-specific scheduling algorithm of the respective network slice and the respective radio resource configuration of the respective network slice, the number of radio bearers to allocate to each data radio bearer associated with the respective network slice up to a maximum value for the respective network slice that is constrained by a sum of dedicated resources and prioritized resources associated with the respective network slice, and output a list of the data radio bearers of the user equipments having radio bearers assigned thereto along with the respective numbers of radio bearers allocated to the respective data radio bearers of the user equipments and a list of data radio bearers of the user equipments without any radio bearers assigned thereto. In at least some example embodiments, the slice-specific scheduling algorithm associated with the respective network slice includes one of a proportional fair scheduling algorithm, a round robin scheduling algorithm, or a maximum throughput scheduling algorithm. In at least some example embodiments, to determine the second resource allocation, the computer program instructions, when executed by the at least one apparatus, cause the apparatus at least to determine, for each network slice in the second subset of slices based on a system-level scheduling algorithm and the respective radio resource configuration of the respective network slice, the number of radio bearers to allocate to each data radio bearer associated with the respective network slice up to a maximum value bounded by the resource availability within the shared resource pool, and output a list of the data radio bearers of the user equipments along with the respective numbers of radio bearers allocated to the respective data radio bearers of the user equipments. In at least some example embodiments, to determine, for each user equipment in the set of the user equipments based on the first resource allocation and the second resource allocation, allocation of the respective set of virtual resource blocks to the respective user equipment, the computer program instructions, when executed by the at least one apparatus, cause the apparatus at least to determine, for each user equipment in the set of user equipments based on the first resource allocation and the second resource allocation, a respective number of radio bearers assigned to each data radio bearer of the respective user equipment, and assign, to each user equipment based on the respective number of radio bearers assigned to each data radio bearer of the respective user equipment, specific virtual resource blocks for use by each data radio bearer of the respective user equipment. In at least some example embodiments, the computer program instructions, when executed by the at least one apparatus, cause the apparatus at least to support, by the base station based on a set of application programming interfaces, at least one of configuration of the network slices by the controller or collection of operating statistics of the network slices by the controller. In at least some example embodiments, the computer program instructions, when executed by the at least one apparatus, cause the apparatus at least to support, by the base station, a set of services between the base station and the controller based on a set of message types. In at least some example embodiments, the set of services includes a set of report services and the set of report services includes at least one of a slice context report including configuration information and statistics data at the base station for one or more of the network slices, a user equipment context report including slice-related configuration information and statistics data at the base station for one or more of the user equipments, or a context change report for synchronizing slice-related context between the controller and the base station. In at least some example embodiments, the set of services includes a set of control services, wherein the set of control services includes at least one of a slice configuration service for configuring at least one of the network slice parameters for one or more of the network slices, or a user equipment configuration service for configuring user equipment specific slice parameters. In at least some example embodiments, the set of message types includes at least one of an indication message or a control message.

In at least some example embodiments, a method includes exchanging, by a base station of a radio access network with a controller of the radio access network, messages related to configuration of a set of network slices on the base station, maintaining, by the base station, network slice configuration information for the set of network slices, wherein the network slice configuration information includes, for each network slice in the set of network slices, a respective set of network slice parameters for the respective network slice that includes an operational state of the respective network slice, a radio resource configuration of the respective network slice that is based on the operational state of the respective network slice, and a slice-specific scheduling algorithm of the respective network slice, and performing, by the base station based on the network slice configuration information for the set of network slices, slice-aware allocation of frequency domain resources of the radio access network to a set of user equipments associated with the base station. In at least some example embodiments, the method includes supporting, by the base station for at least one of the network slices based on one or more control messages from the controller, configuration of the respective set of network slice parameters for the network slice to meet a set of requirements of a use case served by the radio access network. In at least some example embodiments, the operational state of the respective network slice is based on a set of operational states supported for the set of network slices, wherein the set of operational states includes an idle state, a dedicated state, a prioritized state, a shared state, and a hybrid state. In at least some example embodiments, the radio resource configuration of the respective network slice is based on the operational state of the respective network slice, wherein the respective network slice is in the dedicated state and the radio resource configuration includes an indication of a quantity of radio resources dedicated to the respective network slice, the respective network slice is in the prioritized state and the radio resource configuration includes an indication of a quantity of radio resources to which the respective network slice has priority access, the respective network slice is in the shared state and the radio resource configuration includes an indication of a shared priority parameter indicative of a priority level of the respective network slice for access to a shared pool of radio resources, the respective network slice is in the hybrid state and the radio resource configuration includes a dedicated radio resource configuration indicative of a quantity of radio resources dedicated to the respective network slice, a prioritized radio resource configuration indicative of a quantity of radio resources to which the respective network slice has priority access, and a shared priority parameter indicative of a priority level of the respective network slice for access to a shared pool of radio resources. In at least some example embodiments, the slice-specific scheduling algorithm of the respective network slice includes one of a proportional fair scheduling algorithm, a round robin scheduling algorithm, or a maximum throughput scheduling algorithm. In at least some example embodiments, for each network slice in the set of network slices, the respective set of network slice parameters for the respective network slice further includes at least one of an indication of a radio access technology of the respective network slice or a set of radio access network level user plane associations for the respective network slice. In at least some example embodiments, for at least one of the network slices in the set of network slices, the operational state of the respective network slice is based on an event-driven network slice state machine supporting an idle state in which the respective network slice does not have any data radio bearers assigned thereto, a dedicated state in which the respective network slice has a set of dedicated radio resources assigned thereto, a prioritized state in which the respective network slice has priority access to a set of radio resources assigned to the respective network slice and unused ones of the radio resources assigned to the respective network slice are allocated to a shared pool of radio resources, a shared state in which the respective network slice does not have an explicit assignment of radio resources and has access to a shared pool of radio resources based on a priority of the respective network slice, and a hybrid state in which the respective network slice includes a dedicated radio resource configuration, a prioritized radio resource configuration, and a shared priority parameter. In at least some example embodiments, the slice-aware allocation of frequency domain resources of the radio access network to the set of user equipments of the radio access network is based on allocation of frequency domain resources to data radio bearers of the user equipments based on the respective operational states of the respective network slices, the respective radio resource configurations of the respective network slices, and the respective slice-specific scheduling algorithms of the respective network slices. In at least some example embodiments, the slice-aware allocation of frequency domain resources of the radio access network to the set of user equipments of the radio access network is based on a first scheduling stage, based on slice-specific scheduling of frequency domain resources to the user equipments, to provide a first resource allocation for the set of user equipments, a second scheduling stage, based on system-level scheduling of shared frequency domain resources to the user equipments, to provide a second resource allocation for the set of user equipments, and a third scheduling stage in which virtual resource blocks are assigned to data radio bearers of the user equipments based on the first resource allocation for the set of user equipments and the second resource allocation for the set of user equipments. In at least some example embodiments, performing slice-aware allocation of frequency domain resources of the radio access network to the set of user equipments of the radio access network includes determining, for each network slice in the set of network slices, a respective set of data radio bearers of the set of user equipments associated with the respective network slice, and determining, for each user equipment in the set of the user equipments based on slice-aware scheduling based on the set of network slices, a respective set of virtual resource blocks assigned to the respective user equipment. In at least some example embodiments, determining, for each user equipment in the set of the user equipments based on slice-aware scheduling based on the set of network slices, the respective set of virtual resource blocks assigned to the respective user equipment includes determining, for each network slice in a first subset of network slices that includes ones of the network slices in a dedicated state, a prioritized state, or a hybrid state, a first resource allocation indicative of a respective number of radio bearers to allocate to each data radio bearer associated with the respective network slice, determining, for each network slice in a second subset of network slices including ones of the network slices in the hybrid state or a shared state, a second resource allocation indicative of a number of radio bearers to allocate to each data radio bearer associated with the respective network slice, and determining, for each user equipment in the set of the user equipments based on the first resource allocation and the second resource allocation, allocation of the respective set of virtual resource blocks to the respective user equipment. In at least some example embodiments, the first resource allocation is determined based on respective slice-specific scheduling algorithms applied for the respective ones of the network slices in the first subset of network slices, wherein the second resource allocation is determined based on a system-level scheduling algorithm applied for the ones of the network slices in the second subset of network slices. In at least some example embodiments, determining the first resource allocation includes determining, for each network slice in the first subset of network slices based on the respective slice-specific scheduling algorithm of the respective network slice and the respective radio resource configuration of the respective network slice, the number of radio bearers to allocate to each data radio bearer associated with the respective network slice up to a maximum value for the respective network slice that is constrained by a sum of dedicated resources and prioritized resources associated with the respective network slice, and outputting a list of the data radio bearers of the user equipments having radio bearers assigned thereto along with the respective numbers of radio bearers allocated to the respective data radio bearers of the user equipments and a list of data radio bearers of the user equipments without any radio bearers assigned thereto. In at least some example embodiments, the slice-specific scheduling algorithm associated with the respective network slice includes one of a proportional fair scheduling algorithm, a round robin scheduling algorithm, or a maximum throughput scheduling algorithm. In at least some example embodiments, determining the second resource allocation includes determining, for each network slice in the second subset of slices based on a system-level scheduling algorithm and the respective radio resource configuration of the respective network slice, the number of radio bearers to allocate to each data radio bearer associated with the respective network slice up to a maximum value bounded by the resource availability within the shared resource pool, and outputting a list of the data radio bearers of the user equipments along with the respective numbers of radio bearers allocated to the respective data radio bearers of the user equipments. In at least some example embodiments, determining, for each user equipment in the set of the user equipments based on the first resource allocation and the second resource allocation, allocation of the respective set of virtual resource blocks to the respective user equipment includes determining, for each user equipment in the set of user equipments based on the first resource allocation and the second resource allocation, a respective number of radio bearers assigned to each data radio bearer of the respective user equipment, and assigning, to each user equipment based on the respective number of radio bearers assigned to each data radio bearer of the respective user equipment, specific virtual resource blocks for use by each data radio bearer of the respective user equipment. In at least some example embodiments, the method includes supporting, by the base station based on a set of application programming interfaces, at least one of configuration of the network slices by the controller or collection of operating statistics of the network slices by the controller. In at least some example embodiments, the method includes supporting, by the base station, a set of services between the base station and the controller based on a set of message types. In at least some example embodiments, the set of services includes a set of report services and the set of report services includes at least one of a slice context report including configuration information and statistics data at the base station for one or more of the network slices, a user equipment context report including slice-related configuration information and statistics data at the base station for one or more of the user equipments, or a context change report for synchronizing slice-related context between the controller and the base station. In at least some example embodiments, the set of services includes a set of control services, wherein the set of control services includes at least one of a slice configuration service for configuring at least one of the network slice parameters for one or more of the network slices, or a user equipment configuration service for configuring user equipment specific slice parameters. In at least some example embodiments, the set of message types includes at least one of an indication message or a control message.

In at least some example embodiments, an apparatus includes means for exchanging, by a base station of a radio access network with a controller of the radio access network, messages related to configuration of a set of network slices on the base station, means for maintaining, by the base station, network slice configuration information for the set of network slices, wherein the network slice configuration information includes, for each network slice in the set of network slices, a respective set of network slice parameters for the respective network slice that includes an operational state of the respective network slice, a radio resource configuration of the respective network slice that is based on the operational state of the respective network slice, and a slice-specific scheduling algorithm of the respective network slice, and means for performing, by the base station based on the network slice configuration information for the set of network slices, slice-aware allocation of frequency domain resources of the radio access network to a set of user equipments associated with the base station. In at least some example embodiments, the apparatus includes means for supporting, by the base station for at least one of the network slices based on one or more control messages from the controller, configuration of the respective set of network slice parameters for the network slice to meet a set of requirements of a use case served by the radio access network. In at least some example embodiments, the operational state of the respective network slice is based on a set of operational states supported for the set of network slices, wherein the set of operational states includes an idle state, a dedicated state, a prioritized state, a shared state, and a hybrid state. In at least some example embodiments, the radio resource configuration of the respective network slice is based on the operational state of the respective network slice, wherein the respective network slice is in the dedicated state and the radio resource configuration includes an indication of a quantity of radio resources dedicated to the respective network slice, the respective network slice is in the prioritized state and the radio resource configuration includes an indication of a quantity of radio resources to which the respective network slice has priority access, the respective network slice is in the shared state and the radio resource configuration includes an indication of a shared priority parameter indicative of a priority level of the respective network slice for access to a shared pool of radio resources, the respective network slice is in the hybrid state and the radio resource configuration includes a dedicated radio resource configuration indicative of a quantity of radio resources dedicated to the respective network slice, a prioritized radio resource configuration indicative of a quantity of radio resources to which the respective network slice has priority access, and a shared priority parameter indicative of a priority level of the respective network slice for access to a shared pool of radio resources. In at least some example embodiments, the slice-specific scheduling algorithm of the respective network slice includes one of a proportional fair scheduling algorithm, a round robin scheduling algorithm, or a maximum throughput scheduling algorithm. In at least some example embodiments, for each network slice in the set of network slices, the respective set of network slice parameters for the respective network slice further includes at least one of an indication of a radio access technology of the respective network slice or a set of radio access network level user plane associations for the respective network slice. In at least some example embodiments, for at least one of the network slices in the set of network slices, the operational state of the respective network slice is based on an event-driven network slice state machine supporting an idle state in which the respective network slice does not have any data radio bearers assigned thereto, a dedicated state in which the respective network slice has a set of dedicated radio resources assigned thereto, a prioritized state in which the respective network slice has priority access to a set of radio resources assigned to the respective network slice and unused ones of the radio resources assigned to the respective network slice are allocated to a shared pool of radio resources, a shared state in which the respective network slice does not have an explicit assignment of radio resources and has access to a shared pool of radio resources based on a priority of the respective network slice, and a hybrid state in which the respective network slice includes a dedicated radio resource configuration, a prioritized radio resource configuration, and a shared priority parameter. In at least some example embodiments, the slice-aware allocation of frequency domain resources of the radio access network to the set of user equipments of the radio access network is based on allocation of frequency domain resources to data radio bearers of the user equipments based on the respective operational states of the respective network slices, the respective radio resource configurations of the respective network slices, and the respective slice-specific scheduling algorithms of the respective network slices. In at least some example embodiments, the slice-aware allocation of frequency domain resources of the radio access network to the set of user equipments of the radio access network is based on a first scheduling stage, based on slice-specific scheduling of frequency domain resources to the user equipments, to provide a first resource allocation for the set of user equipments, a second scheduling stage, based on system-level scheduling of shared frequency domain resources to the user equipments, to provide a second resource allocation for the set of user equipments, and a third scheduling stage in which virtual resource blocks are assigned to data radio bearers of the user equipments based on the first resource allocation for the set of user equipments and the second resource allocation for the set of user equipments. In at least some example embodiments, the means for performing slice-aware allocation of frequency domain resources of the radio access network to the set of user equipments of the radio access network includes means for determining, for each network slice in the set of network slices, a respective set of data radio bearers of the set of user equipments associated with the respective network slice, and means for determining, for each user equipment in the set of the user equipments based on slice-aware scheduling based on the set of network slices, a respective set of virtual resource blocks assigned to the respective user equipment. In at least some example embodiments, the means for determining, for each user equipment in the set of the user equipments based on slice-aware scheduling based on the set of network slices, the respective set of virtual resource blocks assigned to the respective user equipment includes means for determining, for each network slice in a first subset of network slices that includes ones of the network slices in a dedicated state, a prioritized state, or a hybrid state, a first resource allocation indicative of a respective number of radio bearers to allocate to each data radio bearer associated with the respective network slice, means for determining, for each network slice in a second subset of network slices including ones of the network slices in the hybrid state or a shared state, a second resource allocation indicative of a number of radio bearers to allocate to each data radio bearer associated with the respective network slice, and means for determining, for each user equipment in the set of the user equipments based on the first resource allocation and the second resource allocation, allocation of the respective set of virtual resource blocks to the respective user equipment. In at least some example embodiments, the first resource allocation is determined based on respective slice-specific scheduling algorithms applied for the respective ones of the network slices in the first subset of network slices, wherein the second resource allocation is determined based on a system-level scheduling algorithm applied for the ones of the network slices in the second subset of network slices. In at least some example embodiments, the means for determining the first resource allocation includes means for determining, for each network slice in the first subset of network slices based on the respective slice-specific scheduling algorithm of the respective network slice and the respective radio resource configuration of the respective network slice, the number of radio bearers to allocate to each data radio bearer associated with the respective network slice up to a maximum value for the respective network slice that is constrained by a sum of dedicated resources and prioritized resources associated with the respective network slice, and means for outputting a list of the data radio bearers of the user equipments having radio bearers assigned thereto along with the respective numbers of radio bearers allocated to the respective data radio bearers of the user equipments and a list of data radio bearers of the user equipments without any radio bearers assigned thereto. In at least some example embodiments, the slice-specific scheduling algorithm associated with the respective network slice includes one of a proportional fair scheduling algorithm, a round robin scheduling algorithm, or a maximum throughput scheduling algorithm. In at least some example embodiments, the means for determining the second resource allocation includes means for determining, for each network slice in the second subset of slices based on a system-level scheduling algorithm and the respective radio resource configuration of the respective network slice, the number of radio bearers to allocate to each data radio bearer associated with the respective network slice up to a maximum value bounded by the resource availability within the shared resource pool, and means for outputting a list of the data radio bearers of the user equipments along with the respective numbers of radio bearers allocated to the respective data radio bearers of the user equipments. In at least some example embodiments, the means for determining, for each user equipment in the set of the user equipments based on the first resource allocation and the second resource allocation, allocation of the respective set of virtual resource blocks to the respective user equipment includes means for determining, for each user equipment in the set of user equipments based on the first resource allocation and the second resource allocation, a respective number of radio bearers assigned to each data radio bearer of the respective user equipment, and means for assigning, to each user equipment based on the respective number of radio bearers assigned to each data radio bearer of the respective user equipment, specific virtual resource blocks for use by each data radio bearer of the respective user equipment. In at least some example embodiments, the apparatus includes means for supporting, by the base station based on a set of application programming interfaces, at least one of configuration of the network slices by the controller or collection of operating statistics of the network slices by the controller. In at least some example embodiments, the apparatus includes means for supporting, by the base station, a set of services between the base station and the controller based on a set of message types. In at least some example embodiments, the set of services includes a set of report services and the set of report services includes at least one of a slice context report including configuration information and statistics data at the base station for one or more of the network slices, a user equipment context report including slice-related configuration information and statistics data at the base station for one or more of the user equipments, or a context change report for synchronizing slice-related context between the controller and the base station. In at least some example embodiments, the set of services includes a set of control services, wherein the set of control services includes at least one of a slice configuration service for configuring at least one of the network slice parameters for one or more of the network slices, or a user equipment configuration service for configuring user equipment specific slice parameters. In at least some example embodiments, the set of message types includes at least one of an indication message or a control message.

### BRIEF DESCRIPTION OF THE DRAWINGS

The teachings herein can be readily understood by considering the following detailed description in conjunction with the accompanying drawings, in which:
FIG. 1 depicts an example embodiment of a communication system including a radio access network (RAN) configured to support various example embodiments of a programmable network slicing framework;
FIG. 2 depicts an example embodiment of a FlexiSLICE programmable RAN slicing framework configured to support RAN slicing within the context of a RAN;
FIG. 3 depicts an example embodiment of a RAN slice state machine configured to support transitions between slice states for RAN slices used for RAN slicing;
FIG. 4 depicts an example embodiment of a process for allocation of frequency domain resources of a RAN to a set of user equipments based on FlexiSLICE Frequency Domain Scheduling Framework;
FIG. 5 depicts an example embodiment of a portion of the FlexiSLICE Frequency Domain Scheduling Framework configured to support allocation of frequency domain resources of a RAN to a set of user equipments based on a slice-specific frequency domain scheduling stage;
FIG. 6 depicts an example embodiment of a portion of the FlexiSLICE Frequency Domain Scheduling Framework configured to support allocation of frequency domain resources of a RAN to a set of user equipments based on a system-level shared frequency domain scheduling stage;
FIG. 7 depicts an example embodiment of a FlexiSLICE Telemetry Registration procedure for use within the FlexiSLICE framework;
FIG. 8 depicts an example embodiment of a FlexiSLICE Context Reporting procedure for use within the FlexiSLICE framework;
FIG. 9 depicts an example embodiment of a FlexiSLICE Context Configuration procedure for use within the FlexiSLICE framework;
FIG. 10 depicts an example embodiment of a method for use by a controller to support network slicing in a RAN;
FIG. 11 depicts an example embodiment of a method for use by a base station (BS) to support network slicing in a RAN;
FIGs. 12A and 12B depict results from example implementations of FlexiSLICE within an over-the-air (OTA) experimental network supporting a set of user equipments; and
FIG. 13 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments of a programmable network slicing framework are presented herein. Various example embodiments of the programmable network slicing framework may be configured to support programmable network slicing in a cellular communication system. Various example embodiments of the programmable network slicing framework may be configured to support programmable network slicing in a radio access network (RAN) portion of a cellular communication system based on a programmable RAN slicing framework. Various example embodiments of the programmable RAN slicing framework may be configured to support programmable network slicing in a RAN based on use of a set of RAN slices having associated therewith network slice operational states and associated network slice configurations which may be used for assignment of RAN resources to user equipments (UEs) of the RAN. Various example embodiments of the programmable RAN slicing framework may be configured to support programmable network slicing in a RAN based on use of a frequency domain scheduling capability to assign frequency domain resources of RAN slices to UEs of the RAN, based on network slice operational states and associated network slice configurations of the RAN slices, where the frequency domain scheduling capability is configured to support a slice-specific scheduling stage, a system-level scheduling stage, and a UE scheduling stage. Various example embodiments of the programmable RAN slicing framework may be configured to support programmable network slicing in a RAN based on use of various types of messaging to support the programmable network slicing (e.g., messaging between base stations (BSs) and controllers, internal messaging within BSs based on one or more application programming interfaces (APIs), or the like, as well as various combinations thereof). Various example embodiments of the programmable RAN slicing framework may be referred to herein as FlexiSLICE, although it will be appreciated that various example embodiments presented herein as forming part of the FlexiSLICE framework (or described more generally as being part of the programmable network slicing framework or the programmable network slicing capability) may be applied for supporting network slicing in various other communication network contexts (e.g., in other portions of cellular communication systems, in other types of wireless communication networks, in other types of communication networks, or the like, as well as various combinations thereof). It will be appreciated that these and various other example embodiments of the programmable network slicing framework may be further understood by first considering more general aspects of network slicing and radio access network slicing as discussed further below.

Network slicing is a virtual network architecture that supports creation of multiple virtual networks on top of a single underlying physical network, thereby enabling creation of multiple network slices which may be configured in various ways for various purposes. Network slicing has become increasingly important in communication networks for many different reasons. For example, evolution of cellular networks from Fourth Generation (4G) toward Fifth Generation (5G) and evolution of cellular networks from 5G toward 5G-Advanced and Sixth Generation (6G) have been accompanied by an abundance of new use cases relating to various industries which may rely on such cellular networks (e.g., manufacturing, logistics, automotive, energy, extended reality, and so forth). These new use cases are often characterized by highly diverse, and sometimes even conflicting, communications requirements such as data rates, latency, availability, and reliability. Additionally, evolution of cellular networks also often results in growing network complexity related to new functions and services configured to provide the latest communication technologies and associated communication services. Consequently, the service diversity and the growing network complexity present an immense challenge for communications service providers (CSPs), with the dynamic orchestration and coordination of network resources becoming increasingly important for operational efficiency. Since building dedicated networks for each of the potential user cases is typically not economically viable, network slicing has emerged as an important technology for efficiently supporting highly diverse use cases. Network slicing allows CSPs to run multiple logical networks as virtually isolated slices on top of a common physical network infrastructure, thereby allowing the network to be delivered "as-a-service" with each of the provisioned network slices having varying service level agreements (SLAs). While network slices may traverse all domains of the network - edge, access, transport, and core - slicing in the radio access network (RAN) portion of the communication network (i.e., RAN slicing) is often considered to be more important than slicing in other portions of the communication network.

RAN slicing is typically important because RAN slicing has a direct, perceptible impact on end-user experience. As a result, RAN slicing is often a key component of radio resource management (RRM) strategies employed by CSPs to achieve optimal radio resource utilization and enhanced network monetization. To that end, 3GPP has introduced, in the 3GPP Technical Specification (TS) 28.451, the Network Resource Model (NRM) which provides an information model for the management of network slices. The NRM introduces the notion of an RRM Policy Ratio which can be applied to a group of one or more RAN slices. The policy generally allows for flexibility in resource assignment to RAN slices. At the same time, driven by the desire to streamline RAN management and control, a consortium of vendors, CSPs, and academic institutions, known as the Open - Radio Access Network (O-RAN) Alliance, has introduced the O-RAN architecture, which is paving the way for robust software-defined control of the access network. O-RAN, through a set of external network controllers (i.e., RAN Intelligent Controllers (RICs) including the near-real time (near-RT) RIC (near-RT RIC) and non-real time (non-RT) RIC (non-RT RIC)), has given rise to the possibility of introducing new network control functionalities and assurance frameworks specifically targeted toward the RAN. In particular, the near-RT RIC operates on a timescale of > 10 ms and exercises near-real time control of the underlying RAN over the E2 interface through applications called xApps. Key functions of the near-RT RIC include interpretation and enforcement of policies from the non-RT RIC, along with the collection of statistics. On the other hand, as part of the Service Management and Orchestration (SMO) framework, the non-RT RIC oversees control and optimization of RAN elements on a non-real time, i.e., > 1 s, basis. Such control is enabled through applications called rApps that are responsible for providing policy-based guidance and enrichment information for the near-RT RIC. The SMO (and, thus, non-RT RIC) leverages the O1 interface to interact with both the RAN and the near-RT RIC, and, additionally, the non-RT RIC can also use the A1 interface to interact with the near-RT RIC. The near-RT and non-RT control and assurance capabilities introduced by the O-RAN architecture have made the O-RAN architecture a useful ecosystem for the management and optimization of network slices, with several RAN slicing-focused use cases being proposed in the specifications.

Various example embodiments of a programmable network slicing framework, given the importance of RAN slicing as discussed above, may be configured to support a programmable RAN slicing framework. Various example embodiments of a programmable RAN slicing framework may be configured to support new functions and services, new interfaces, new methods, and new capabilities to support highly flexible and programmable RAN slicing operations. Various example embodiments of a programmable RAN slicing framework may be configured to provide RAN slice assurance with use case-driven customization primitives and service-based optimizations. Various example embodiments of a programmable RAN slicing framework may be configured to provide a comprehensive RAN slicing framework within the RRM domain while leveraging the network performance optimization opportunities introduced by the O-RAN ecosystem. Various example embodiments of a programmable RAN slicing framework may be configured to provide a highly-modular, programmable framework for RAN slicing which can be integrated within both RRM/O-RAN-based systems as well as vendor proprietary systems. various example embodiments of the programmable RAN slicing framework may be configured to support a comprehensive RAN slicing framework enabling flexible and customizable RAN slicing capabilities that enable customized functionality and network operations which are capable of supporting various individual use cases such as enhanced mobile broadband (eMBB), ultra-reliable low latency communications (URLLC), massive IoT (MIoT), industrial communications (e.g., factories, mining, or the like), vehicular communications (e.g., Vehicle-to-Everything (V2X) communications or other suitable vehicular communications), reality-related applications (e.g., virtual reality (VR), augmented reality (AR), missed reality (MR), extensible reality (XR), or the like), or the like, as well as various combinations thereof. It will be appreciated that these and various other example embodiments of the programmable network slicing framework may be further understood within the context of various figures presented herein, which are discussed further below.

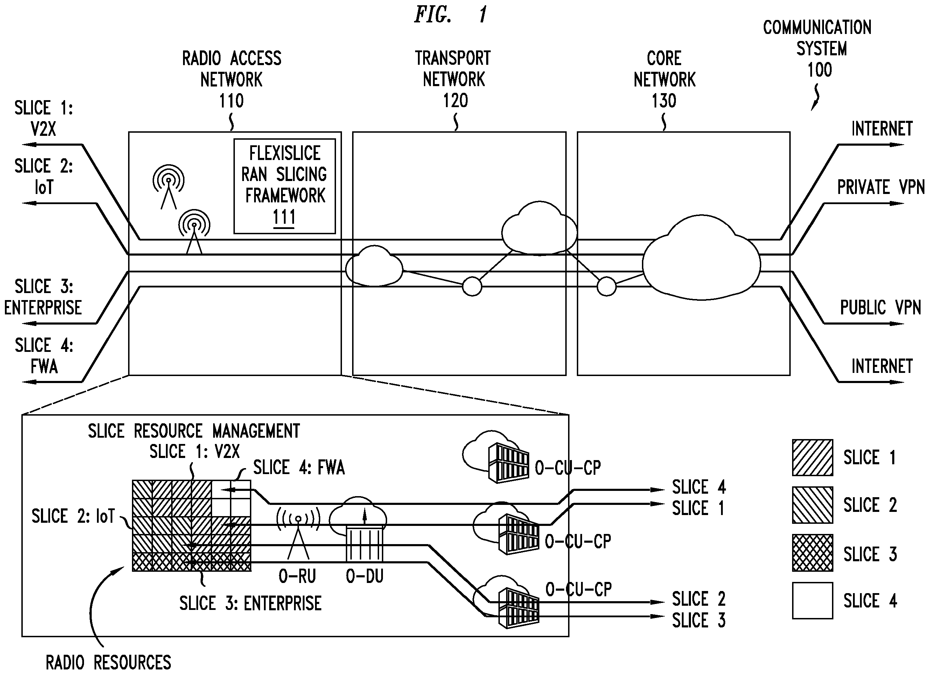

FIG. 1 depicts an example embodiment of a communication system including a radio access network configured to support various example embodiments of a programmable network slicing framework.

As illustrated in FIG. 1, the communication system 100 may support various types of communication services for various types of communication devices (omitted for purposes of clarity) which may access and communicate via the communication system 100 (e.g., user equipments (UEs), IoT devices, or the like). The communication system 100 includes a radio access network 110, a transport network 120, and a core network 130. The radio access network 110 supports cellular access by communication devices, and may include elements such as BSs, controllers, and so forth (omitted for purposes of clarity). The transport network 120 120 supports transport of communications between the radio access network 110 and the core network 130, and may include elements such as routers, switches, controllers, and so forth (omitted for purposes of clarity). The core network 130 supports core network functions for the radio access network 110, such as authentication, authorization, mobility management, data management, policy management, and so forth, and may include elements such as management entities, controllers, routing elements, and so forth (omitted for purposes of clarity). The core network 130 may support interfaces to various other communication networks with which communication devices associated with the radio access network 110 may communicate (e.g., the Internet, public networks, private networks, enterprise networks, data centers, or the like, as well as various combinations thereof). It will be appreciated that the communication system 100 may include various other networks, various other elements, or the like, as well as various combinations thereof.

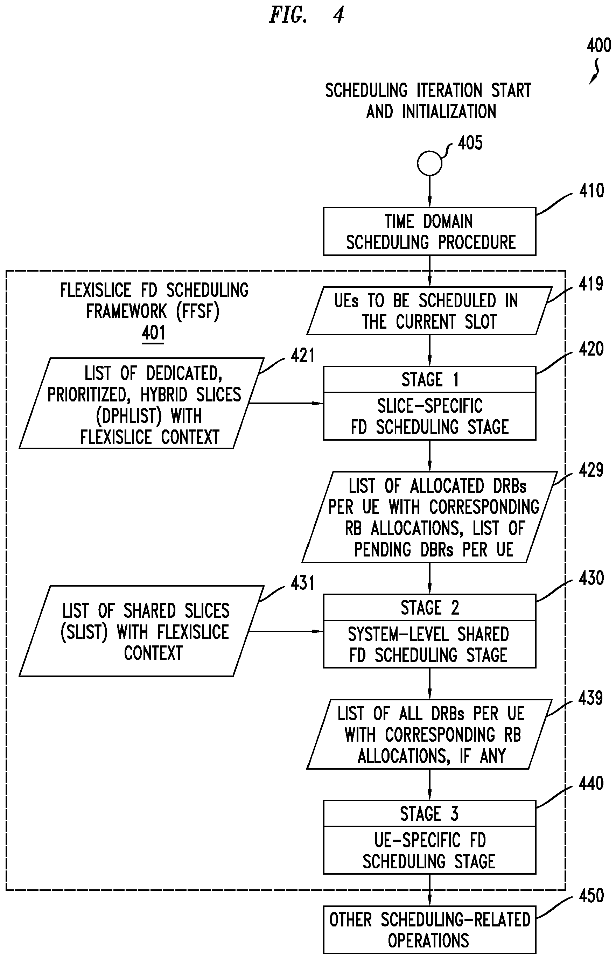

As illustrated in FIG. 1, the communication system 100 supports network slicing in each of the radio access network 110, the transport network 120, and the core network 130, with four examples of network slices being illustrated. As depicted in FIG. 4, each of the four slices is supported within the radio access network 110, the transport network 120, and the core network 130. In the example of FIG. 1, the four slices include a V2X slice (denoted as Slice 1) that is supported over the Internet, an IoT slice (denoted as Slice 2) that is supported over a private virtual private network (VPN), an Enterprise slice (denoted as Slice 3) that is supported over a public VPN, and a Fixed Wireless Access (FWA) slice (denoted as Slice 4) that is supported over the Internet. It will be appreciated that these network slices may be coordinated across the radio access network 110, the transport network 120, and the core network 130, or may be provided independent within the radio access network 110, the transport network 120, and the core network 130 and then stitched between the radio access network 110, the transport network 120, and the core network 130 to provide the end-to-end slicing. It will be appreciated that, although primarily presented with respect to supporting specific numbers and types of network slices, various other numbers of network slices may be supported, various other types of network slices may be supported, or the like, as well as various combinations thereof. It will be appreciated that, although primarily presented with respect to supporting network slicing in each of the radio access network 110, the transport network 120, and the core network 130, network slicing may be implemented in various subsets of such networks (although it will be appreciated that various example embodiments herein are primarily directed to support for network slicing within the radio access network 110).

As illustrated in FIG. 1, network slicing is supported within the radio access network 110. The network slicing within the radio access network 110 enables dynamic assignment of radio resources to the different network slices. It will be appreciated that, while the radio resources that are assigned to the network slices may vary in different types of cellular networks (e.g., 5G versus 6G), the radio resources generally represent frequency resources (e.g., in the form of physical resource blocks, virtual resource blocks, or the like) which may be dynamically assigned for use by communication devices associated with the radio access network 110. In the example of FIG. 1, network slicing within the radio access network 110 result in dynamic assignment of frequency domain resources of the radio access network 110 (e.g., in the form of resource blocks) to the four slices. In the example of FIG. 1, Slice 1 (supporting the V2X service) is allocated twelve resource blocks out of the thirty available resource blocks, Slice 2 (supporting the IoT service) is allocated eight resource blocks out of the thirty available resource blocks, Slice 3 (supporting the Enterprise service) is allocated six resource blocks out of the thirty available resource blocks, and Slice 4 (supporting the FWA service) is allocated the remaining four resource blocks out of the thirty available resource blocks. It will be appreciated that, although primarily presented with respect to supporting specific numbers and types of network slices, various other numbers of network slices may be supported, various other types of network slices may be supported, or the like, as well as various combinations thereof.

As illustrated in FIG. 1, the network slicing within the radio access network 110 is supported within the context of an O-RAN architecture, which results in specific paths for the four network slices supported in the radio access network 110. For example, each of the four slices traverses each of the O-RAN Radio Unit (O-RU) (which is a logical node hosting the low-PHY layer and RF processing based on a lower layer functional split) and an O-RAN Distributed Unit (O-DU) (which is a logical node hosting the RLC/MAC/High-PHY layers based on a lower layer functional split). As further illustrated, after the O-DU, the flows of Slice 1 and Slice 4 follow a first network path while the flows of Slice 2 and Slice 3 follow a second network path, with the first network path and the second network path traversing different O-RAN Central Unit - User Plane (O-CU-UP) nodes (which are logical nodes hosting the user plane part of the Packet Data Convergence Protocol (PDCP) and the Service Data Adaptation Protocol (SDAP). More specifically, the data flows of Slice 1 and Slice 4 each traverse a first O-CU-UP and Slice 2 and the data flows of Slice 2 and Slice 3 each traverse a second O-CU-UP. As illustrated, each of the slices may be supported by a corresponding O-RAN Central Unit - Control Plane (O-CU-CP) element, which is a node configured to host the RRC and control plane part of the PDCP protocol.

As illustrated in FIG. 1, the RAN slicing within the radio access network 110 may be based on a FlexiSLICE RAN slicing framework 111. The FlexiSLICE RAN slicing framework 111 may be configured to provide a programmable RAN slicing framework for the radio access network 110. The FlexiSLICE RAN slicing framework 111 may be configured to support dynamic RAN slice characterization for supporting use-case-specific RAN slice customization in order to support a variety of use cases via the radio access network 110. The FlexiSLICE RAN slicing framework 111 may be configured to support dynamic RAN slice characterization for supporting slice-centric frequency domain scheduling within the radio access network 110. The FlexiSLICE RAN slicing framework 111 may be configured to support RAN slicing within the radio access network 110 based on a FlexiSLICE Context and APIs, a FlexiSLICE Frequency Domain (FD) Scheduling Framework (FFSF), a FlexiSLICE Manager (FSM) RAN Function, a FlexiSLICE O-RAN Service Model (E2SM-FSM), a FlexiSLICE Manager (FSM) Mediation xApp, and FlexiSLICE Operational Procedures. For example, as discussed further below, the FlexiSLICE RAN slicing framework 111 may be configured to support robust RAN slice programmability and reporting through the FlexiSLICE Context and APIs, delivery of differentiated scheduling paradigms tailored to specific services being served through the FFSF, control of RAN slicing based on the FSM RAN Function (along with the E2SM-FSM), control of RAN slicing based on the FSM Mediation xApp (e.g., for RIC-RAN interactions), and so forth. It will be appreciated that the FlexiSLICE RAN slicing framework 111 may be include various other capabilities configured to provide a programmable RAN slicing framework for the radio access network 110.

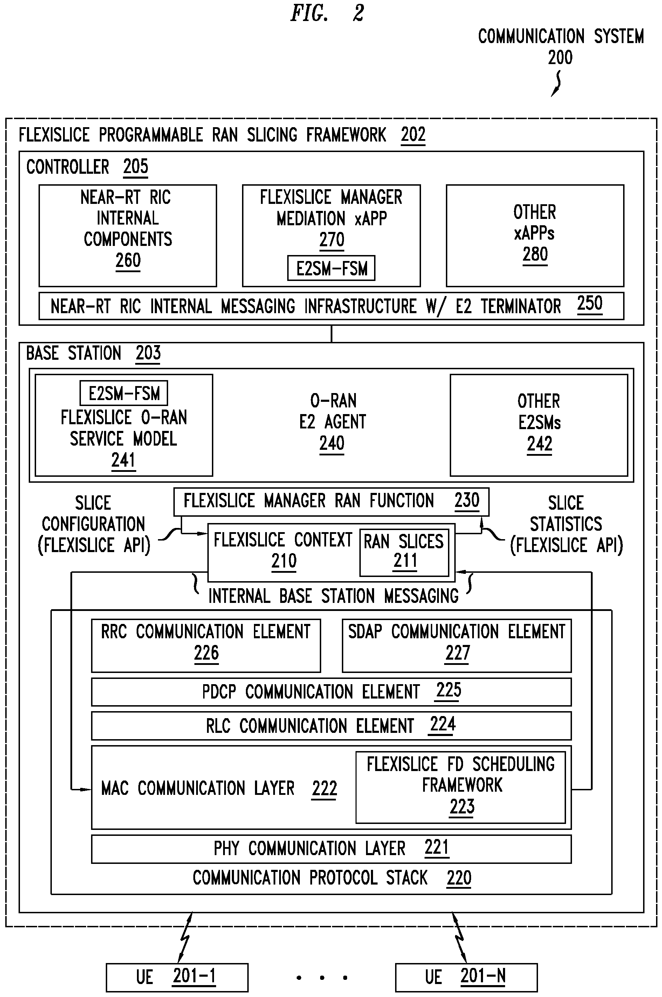

As illustrated in FIG. 1, the RAN slicing within the radio access network 110 may be based on the FlexiSLICE RAN slicing framework 111 which, as discussed above, includes various RAN slicing support capabilities which are discussed further below. The FlexiSLICE Context and APIs provide RAN slice characterization that is supported by an event-driven RAN slice state machine, supporting various slice configuration control capabilities and associated statistics reporting capabilities. The FFSF provides an improved FD scheduling mechanism for slice-aware environments, supporting allocation of frequency domain radio resources to UEs in a slice-aware manner for Transmission Time Intervals (TTIs), e.g., on a per-TTI basis. The FSM RAN Function is configured to control various RAN slicing related operations that occur within the BS, including supporting communications between the BS and the controller in support of RAN slicing related operations that occur within the BS (e.g., supporting various RAN-RIC interactions related to RAN slicing, including programmable configuration of RAN slices by the controller and reporting of slice statistics to the controller). The FSM Mediation xApp is configured to control various RAN slicing related operations that are performed by the controller to support various RAN slicing related operations that occur within the BS, including supporting communications between the BS and the controller in support of RAN slicing related operations that occur within the BS (e.g., supporting various RIC-RAN interactions related to programmatically controlling slice configuration within the RAN and obtaining slice statistics from the RAN). The FSM service model (E2SM-FSM) defines the relevant messages that are exchanged between the BS and the controller (e.g., the FSM Mediation xApp in a near-RT RIC). The FlexiSLICE Operational Procedures support various FlexiSLICE operations, including slice parameter control (e.g., configuration, optimization, or the like), telemetry registration, statistics reporting (e.g., statistics collection, processing, and transmission), and so forth. It will be appreciated that these and other example embodiments may be further understood by way of reference to FIG. 2.

FIG. 2 depicts an example embodiment of a communication system including a FlexiSLICE programmable RAN slicing framework configured to support RAN slicing within the context of a RAN.

The communication system 200 includes a set of user equipments (UEs) 201-1 to 201-N (collectively, UEs 201) which may be allocated radio resources of a radio access network based on RAN slicing supported by a FlexiSLICE programmable RAN slicing framework 202 for the UEs 201. The FlexiSLICE programmable RAN slicing framework 202 includes a base station (BS) 203 configured to provide radio access for the UEs 201 and a controller 205 configured to provide control functions for the BS 203.

The BS 203 is implemented based on O-RAN capabilities (e.g., supporting O-RAN-based control capabilities). The BS 203 includes a FlexiSLICE Context 210, a communication protocol stack 220, a FlexiSLICE Manager (FSM) RAN Function 230, and an O-RAN E2 Agent 240. The FlexiSLICE Context 210 maintains a set of RAN slices 211 for supporting RAN slicing. The communication protocol stack 220 includes a physical (PHY) communication layer 221, a Media Access Control (MAC) communication element 222 that includes a FlexiSLICE FD Scheduling Framework (FFSF) 223, a Radio Link Control (RLC) communication element 224, a PDCP communication element 225, a Radio Resource Control (RRC) communication element 226, and an SDAP communication element 227. The O-RAN E2 Agent 240 includes a FlexiSLICE O-RAN Service Model (E2SM-FSM) 241 and other E2SMs 242. It will be appreciated that the BS 203 may include various other elements configured to support RAN slicing within the context of the FlexiSLICE programmable RAN slicing framework 202.

The BS 203 supports various types of messaging configured to support various aspects of the RAN slicing operations based on FlexiSLICE. The BS 203 supports a set of internal BS messaging interfaces 215 configured to support internal BS messaging for supporting various aspects of the RAN slicing operations based on FlexiSLICE. The internal BS messaging includes internal BS messaging interfaces 215-I including an internal BS messaging interface 215-I1 from the FlexiSLICE Context 210 to the MAC communication element 222 (e.g., for controlling allocation of radio network resources to the UEs 201 based on RAN slicing) and an internal BS messaging interface 215-I2 from the MAC communication element 222 to the FlexiSLICE Context 210 (e.g., for reporting information related to allocation of radio network resources to the UEs 201 based on RAN slicing). The BS 203 supports a set of FlexiSLICE APIs 216 configured to support various aspects of the RAN slicing operations based on FlexiSLICE. The set of FlexiSLICE APIs 216 includes a FlexiSLICE API 216-A1 from the FSM RAN Function 230 to the FlexiSLICE Context 210 (e.g., for controlling Slice Configuration of RAN slices 211 maintained by the FlexiSLICE Context 210) and a FlexiSLICE API 216-A2 from the FlexiSLICE Context 210 to the FSM RAN Function 230 (e.g., for reporting Slice Statistics of RAN slices 211 maintained by the FlexiSLICE Context 210).

The controller 205 is implemented based on O-RAN capabilities (e.g., the controller 205 may be implemented as an O-RAN Near-RT RIC). The controller 205 includes a Near-RT RIC Internal Messaging Infrastructure With E2 Terminator 250, Near-RT RIC Internal Components 260, a FlexiSLICE Manager (FSM) Mediation XApp 270, and Other xApps 280. The FSM Mediation xApp includes

The FlexiSLICE programmable RAN slicing framework 100 also includes an O-RAN E2 Interface 204 between the BS 203 (illustratively, the O-RAN E2 Agent 240 of the BS 203) and the controller 205 (illustratively, the Near-RT RIC Internal Messaging Infrastructure With E2 Terminator 250 of the controller 205). It will be appreciated that the controller 205 may include various other elements configured to support RAN slicing within the context of the FlexiSLICE programmable RAN slicing framework 202.

As illustrated in FIG. 2, the FlexiSLICE Context 210 is configured to support various aspects of the FlexiSLICE programmable RAN slicing framework 202.

The FlexiSLICE Context 210 serves as the data repository for RAN slicing-related operations within the BS 203 based on the RAN slices 211. The FlexiSLICE Context 210 stores configuration and statistics related to RAN slice operations for the RAN slices 211. The FlexiSLICE Context 210 supports internal BS messaging in support of RAN slicing based on the internal BS messaging interfaces 215 (e.g., for controlling allocation of radio network resources to the UEs 201 based on RAN slicing and for reporting information related to allocation of radio network resources to the UEs 201 based on RAN slicing). The FlexiSLICE Context 210 is accessible by external entities (e.g., controller 205) through the set of FlexiSLICE APIs 216 configured to support various aspects of the RAN slicing operations based on FlexiSLICE (e.g., for controlling Slice Configuration of the RAN slices 211 maintained by the FlexiSLICE Context 210 and for reporting Slice Statistics of the RAN slices 211 maintained by the FlexiSLICE Context 210). The FlexiSLICE context 210 also introduces a new RAN slice state machine for slicing-related operations.

The FlexiSLICE Context 210 supports slice definitions for the RAN slices 211 which are used to support RAN slicing for the UEs 210. The RAN slices 211, as indicated below, may be defined as a RAN Network Slice Subnet Instances (NSSIs). The slice definition for a RAN slice 211 may be based on the following parameters:
- Radio Access Technology (RAT): A RAN slice 211 within FlexiSLICE may have one or more RATs associated therewith. For example, the FlexiSLICE framework may be applicable across LTE, NR NSA, NR SA, or the like.
- Operational State: A RAN slice 211 within FlexiSLICE may be characterized by its operational state. At any given point in time, a RAN slice 211 can exist in one of five states - idle, dedicated, prioritized, shared, and hybrid - as described below.
   o Idle State: A RAN slice 211 in the idle state does not have any PDU sessions (or, more specifically, data radio bearers (DRBs)) associated therewith. An idle slice does not consume any RAN-level radio resources.
   ∘ Dedicated State: A RAN slice 211 in the dedicated state is characterized by a dedicated set of radio resources being assigned thereto. Dedicated resources are exclusively reserved for that RAN slice 211 and cannot be used by other RAN slices 211.
   ∘ Prioritized State: A RAN slice 211 in the prioritized state has priority access to the resources assigned thereto, i.e., should the RAN slice 211 need those resources, no other RAN slice 211 can preempt the RAN slice 211 and take those resources. However, resources that are not used by the RAN slice 211 ultimately enter the shared resource pool, from where they can be used by other RAN slices 211.
   ∘ Shared State: A RAN slice 211 in the shared state does not have an explicit resource assignment. Instead, all RAN slices 211 in the shared state have access to a shared resource pool. Resource allocation from the shared resource pool to RAN slices 211 in the shared state is done in accordance with the respective priorities of the RAN slices 211 in the shared state.
   ∘ Hybrid State: A RAN slice 211 in the hybrid state incorporates all three characteristics described above, i.e., a hybrid slice can be viewed as a logical construct that includes all three states (dedicated, prioritized, and shared) in the form of sub-slices.
- Radio Resource Configuration: A RAN slice 211 within FlexiSLICE also may be characterized in terms of its radio resource configuration. More specifically, the radio resource configuration parameters depend on the operational state of the RAN slice 211.
   ∘ Dedicated Slices: For RAN slices 211 in the dedicated state, the radio resource configuration parameter defines the number of resource blocks that are dedicated to that RAN slice 211.
   ∘ Prioritized Slices: For RAN slices 211 in the prioritized state, the radio resource configuration parameter defines the number of resources blocks to which the RAN slice 211 has priority access. The prioritized resource assignment can be viewed as an upper bound on the radio resource availability for that RAN slice 211.
   ∘ Shared Slices: For RAN slices 211 in the shared state, since there is no explicit radio resource assignment, the radio resource configuration parameter represents a priority value which defines the level of priority of the given RAN slice 211 in terms of access to the shared resource pool.
   ∘ Hybrid Slices: For RAN slices 211 in the hybrid state, the RAN slices 211 are characterized by the presence of a dedicated radio resource configuration, a prioritized radio resource configuration, and a shared priority parameter.
- FD Scheduling Algorithm: A RAN slice 211 within FlexiSLICE also may be characterized by the FD Scheduling Algorithm to be used for slice-specific frequency domain resource scheduling for the RAN slice 211 (e.g. a proportional fair scheduling algorithm, a round robin scheduling algorithm, or a maximum throughput scheduling algorithm, or the like). FlexiSLICE is designed to allow custom slice-specific scheduling algorithms and, thus, the FD Scheduling Algorithm becomes a slice characterization parameter for the RAN slice 211.
- RAN-Level User Plane Associations: A RAN slice 211 within FlexiSLICE also may be characterized by the RAN-level user plane entities (e.g., CU-UPs) associated with the RAN slice 211. An approach of this kind ensures that the best candidate user plane entity will be selected for latency critical DRBs, thereby ensuring optimized latency.

The FlexiSLICE Context 210 supports dynamic configuration of the slice definitions for the RAN slices 211. The FlexiSLICE Context 210 supports dynamic configuration of the slice definitions for the RAN slices 211 by controlling the setting of the parameters above (namely, RAT, Operational State, Radio Resource Configuration, FD Scheduling Algorithm, RAN-Level User Plane Associations, and so forth). The FlexiSLICE Context 210 may support dynamic configuration of the slice definitions for the RAN slices 211 in a manner that ensures that the RAN slices 111 can be customized to meet target requirement of specific use cases that the RAN slices 111 are expected to serve.

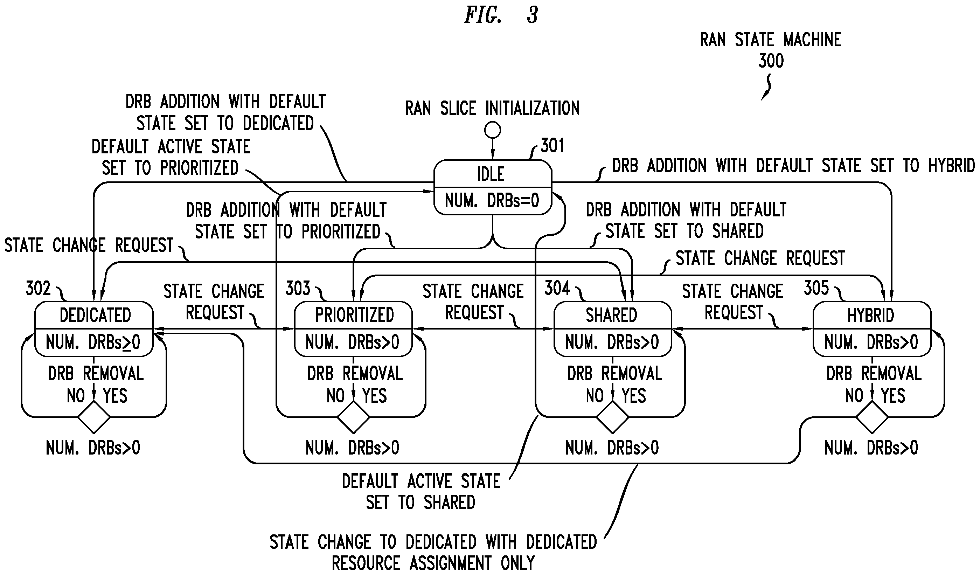

The FlexiSLICE Context 210 is configured to support seamless transitions between the various slice states for each of the RAN slices 211. It is noted that the slice states for the RAN slices 211 may ensure that FlexiSLICE achieves full NRM compliance. The FlexiSLICE Context 210 may be configured to support seamless transitions between the various slice states for each of the RAN slices 211 based on a RAN slice state machine. An example embodiment of a RAN slice state machine is presented with respect to FIG. 3.

FIG. 3 depicts an example embodiment of a RAN slice state machine configured to support transitions between slice states for RAN slices used for RAN slicing.

The RAN slice state machine 300 includes five states for a RAN slice, which enable support for dynamic RAN slicing. The five states for a RAN slice include: an Idle state 301, a Dedicated state 302, a Prioritized state 303, a Shared state 304, and a Hybrid state 305.

The RAN slice state machine 300 supports various state transitions between the defined states under various conditions, thereby enabling support for dynamic RAN slicing. When a RAN slice is initialized within the RAN, the RAN slice is in the Idle state 301 with no active DRBs associated therewith. The RAN slice is configured with a default state to which it can transition upon DRB addition for any PDU sessions associated with that RAN slice. Once a RAN slice transitions to one of the Dedicated state 302, the Prioritized state 303, the Shared state 304, or the Hybrid state 305, the RAN slice remains in that state unless either an explicit state change request is issued through the FlexiSLICE API or if the number of DRBs associated with that RAN slice reaches zero. In the event that the latter condition is met for RAN slices: (1) RAN slices in the Dedicated state 302 experience no state change, (2) RAN slices in the Prioritized state 303 and the Shared state 304 switch to the Idle state 301 with the default active state being set to the Shared state 304, and (3) RAN slices in the Hybrid state 305 switch to the dedicated state while retaining their dedicated resource assignment only, with the remaining resources associated with the RAN slice now entering the shared pool.

The RAN slice state machine 300, based on the supported states and associated state transitions as discussed above, ensures efficient management of radio resources to reflect the operational conditions being experienced by the RAN. For example, during regular operational conditions, public safety RAN slices could operate in the prioritized state during normal conditions and then, during emergencies, such public safety RAN slices could be switched to the dedicated state in order to ensure that, even as public safety devices join and leave the network, such public safety devices always have a guaranteed set of resources available to them.

As illustrated in FIG. 2, the FFSF 223 is configured to support various aspects of the FlexiSLICE programmable RAN slicing framework 202. The FFSF 223 is configured to allocate frequency domain radio resources to the UEs 201 in a slice-aware manner on a per-TTI basis. The FFSF 223 is configured to perform FFSF operations after the time domain scheduling process has been completed and the list of UEs to be scheduled for that TTI is available. The FFSF 223 may include a three-stage frequency domain scheduling process configured to allocate virtual resource blocks (VRBs) to the set of UEs, after which various other scheduler-specific operations may be performed. It is noted that various aspects of the three-stage frequency domain scheduling process are discussed further below and may be further understood by way of reference to FIG. 4.

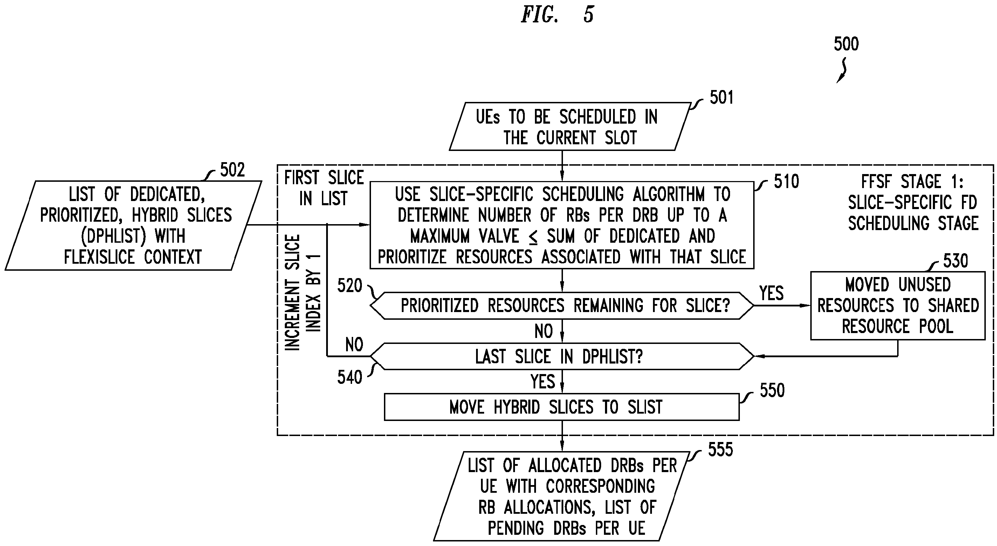

The FFSF 223 is configured to support a slice-specific FD scheduling stage as the first stage of the three-stage frequency domain scheduling process (also referred to as Stage 1). The first stage is used for used for allocating radio resources to the dedicated, prioritized, and hybrid slice types. This stage takes as input the list of UEs to be scheduled in the current slot along with the list of dedicated, prioritized, and hybrid RAN slices characterized by slice-specific context information. Then, based on the slice-specific scheduling algorithm, the FFSF Stage 1 process determines the number of RBs to allocate to each DRB associated with a given RAN slice (namely, to each DRB of each UE associated with the given RAN slice). In general, the sum total of RBs allocated across DRBs within a given RAN slice cannot exceed the sum of dedicated and prioritized resources associated with the RAN slice. After the resource amount has been determined, any remaining prioritized resources are moved to the shared pool, and the process repeats until all RAN slices in the list of dedicated, prioritized, and hybrid RAN slices have been exhausted, after which the hybrid RAN slices are moved to the list of shared RAN slices (such that the list of shared RAN slices then includes shared RAN slices as well as hybrid RAN slices for which the dedicated and prioritized resource assignment has already been scheduled) and the three-stage frequency domain scheduling process proceeds to the second stage. It will be appreciated that various aspects of the slice-specific FD scheduling stage may be further understood by way of reference to FIG. 5.

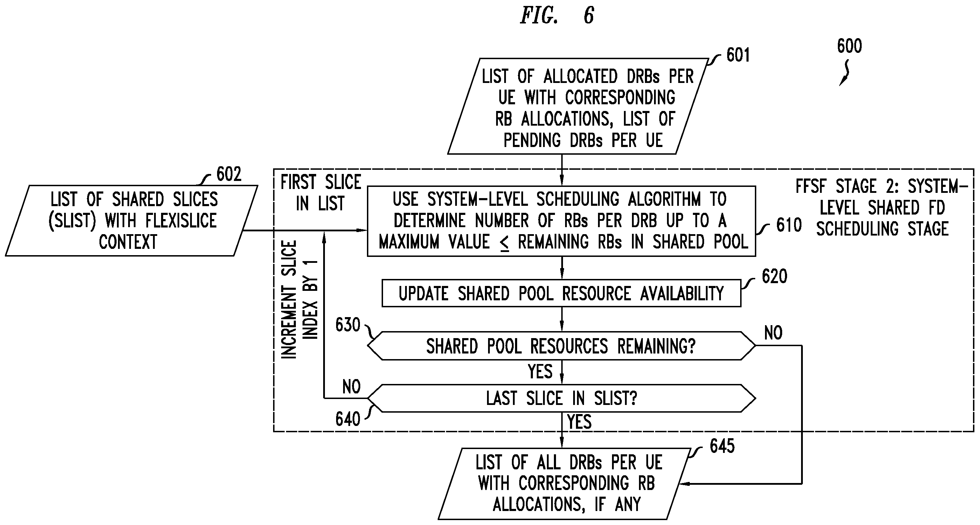

The FFSF 223 is configured to support a system-level shared FD scheduling stage as the second stage of the three-stage frequency domain scheduling process (also referred to as Stage 2). This stage takes as input information that is output from the first stage. Namely, this stage takes as input (1) the list of shared RAN slices that includes the shared RAN slices as well as hybrid RAN slices for which the dedicated and prioritized resource assignment has already been scheduled and (2) the output of the first stage in terms of resources assignments for the DRBs of the UEs, including the list of DRBs to which RBs were allocated in the first stage (including indications of the quantities of RBs assigned to each of the RBs) and the list of pending DRBs which have not yet received allocations of any RBs in the first stage). This stage performs system-level shared FD scheduling based on sorting of the RAN slices in the list of shared RAN slices in accordance with the shared priority parameters of the RAN slices. This stage leverages a common system-level scheduler to determine the amount of radio resources to allocate to DRBs of each RAN slice in the list of shared RAN slices up to a maximum value bounded by the resource availability within the shared resource pool. This stage ends when either all RAN slices within the list of shared RAN slices have been allocated or the shared pool runs out of resources. The output of this stage is the list of all DRBs per UE with the corresponding RB allocations of the DRBs, respectively. This essentially provides an indication of the quantity of radio resources to be allocated to each of the DRBs of each of the UEs in the current time interval, so that the specific radio resources may then be assigned to the UEs in the third stage. It will be appreciated that various aspects of the system-level shared FD scheduling stage may be further understood by way of reference to FIG. 6.

The FFSF 223 is configured to support a UE-specific FD scheduling stage as the third stage of the three-stage frequency domain scheduling process (also referred to as Stage 3). While the first stage and the second stage are used for determining the absolute number of RBs to be allocated to DRBs across RAN slices, this third stage is a UE-specific FD scheduling stage that is configured to assign specific VRBs to UEs in accordance with the resource allocation decisions from the first stage and the second stage. This stage results in assignment of specific VRBs to each of the UEs such that the UEs receive the quantities of radio resources assigned to the UEs based on execution of the first stage and the second stage.

It is noted that the three stages of the FFSF 223 may be further understood by way of reference to FIGs. 4 - 6.

FIG. 4 depicts an example embodiment of a process for allocation of frequency domain resources of a RAN to a set of user equipments based on the FFSF.

The process 400 is a process for allocating frequency domain resources to a set of UEs in a given timeslot, and may be repeated at each time slot for allocating frequency domain resources to a set of UEs at each time slot to ensure that the UEs continue to receive allocations of frequency domain resources over time. As illustrated in FIG. 4, the process 400 is supported by an FFSF 401 (e.g., the FFSF 223 of FIG. 2), which includes three stages configured to perform allocation of the frequency domain resources to the set of UEs: (1) a Slice-Specific FD Scheduling Stage 420, (2) a System-Level Shared FD Scheduling Stage 430, and (3) a UE-Specific FD Scheduling Stage 440.

The process 400 begins with a scheduling iteration start and initialization (indicated by element 405, which indicates the start of the process 400 for the current time slot). The process 400 then proceeds to execution of a Time Domain Scheduling Procedure 410.

The Time Domain Scheduling Procedure 410 supports selection of the set of UEs to be served in the given time slot. In the set of UEs to be served in the given time slot, each UE has associated therewith one or more data radio bearers (DRBs) to be supported by allocation of frequency domain resources to support the one or more DRBs, respectively. In the set of UEs to be served in the given time slot, each UE may be associated with one of the RAN slices to be used to support the one or more DRBs of the UE (e.g., based on the requirements of the UE), respectively. The Time Domain Scheduling Procedure 410 outputs the list of UEs to be scheduled in the current time slot (indicated by box 419). From the Time Domain Scheduling Procedure 410, the process 400 then proceeds to execution of the Slice-Specific FD Scheduling Stage 420 (denoted herein as the First Stage or Stage 1).

The Slice-Specific FD Scheduling Stage 420 (denoted herein as the First Stage or Stage 1) supports slice-specific allocation of frequency domain resources (quantities of resources) to at least a portion of the DRBs of at least a portion of the UEs in the set of UEs to be served in the given time slot. The Slice-Specific FD Scheduling Stage 420 supports slice-specific allocation of frequency domain resources (quantities of resources) to at least a portion of the DRBs of at least a portion of the UEs in the set of UEs to be served in the given time slot based on processing of a first subset of the RAN slices having particular operational states associated therewith.

The Slice-Specific FD Scheduling Stage 420 takes as input the list of UEs to be scheduled in the current time slot (indicated by box 419) that is output by Time Domain Scheduling Procedure 410, and a list of dedicated, prioritized, and hybrid RAN slices characterized by slice-specific context information (indicated by box 421 and denoted as the DPHList). The slice-specific context information for each RAN slice, as described above, may include a set of RAN slice parameters for the RAN slice (e.g., one or more an indication of a RAT of the RAN slice, an indication of a radio resource configuration of the RAN slice (e.g., an amount of radio resources allocated to the RAN slice), a slice-specific scheduling algorithm of the RAN slice (e.g., a proportional fair scheduling algorithm, a round robin scheduling algorithm, a maximum throughput scheduling algorithm, or the like), an indication of a set of radio access network level user plane associations for the respective network slice, or the like, as well as various combinations thereof). The DPHList can be sorted in any suitable manner, such that the RAN slices may be processed in any suitable order.

The Slice-Specific FD Scheduling Stage 420, for each RAN slice in the DPHList, determines the number of RBs to allocate to each DRB associated with the RAN slice where the number of RBs is determined based on the slice-specific context information associated with the RAN slice (e.g., using a slice-specific scheduling algorithm for the RAN slice to assign portions of radio resources allocated to the RAN slice to DRBs of UEs associated with the RAN slice). In general, the sum total of RBs allocated across DRBs within a given RAN slice cannot exceed the sum of dedicated and prioritized resources associated with the RAN slice. After the resource amount has been determined, any remaining prioritized resources are moved to the shared pool, and the process repeats until all RAN slices in DPHList have been exhausted, after which the hybrid RAN slices are moved to a list of shared RAN slices (denoted as SList) for use in the System-Level Shared FD Scheduling Stage 430.

The Slice-Specific FD Scheduling Stage 420 outputs a list of allocated DRBs per UE with corresponding RB allocations and a list of pending DRBs per UE for which RB allocations have not yet been assigned (indicated by box 429). From the Time Domain Scheduling Procedure 420, the process 400 then proceeds to execution of the System-Level Shared FD Scheduling Stage 430 (denoted herein as the Second Stage or Stage 2).

The System-Level Shared FD Scheduling Stage 430 (denoted herein as the Second Stage or Stage 2) supports system-level allocation of frequency domain resources (quantities of resources) to at least a portion of the DRBs of at least a portion of the UEs in the set of UEs to be served in the given time slot. The System-Level Shared FD Scheduling Stage 430 supports slice-specific allocation of frequency domain resources (quantities of resources) to at least a portion of the DRBs of at least a portion of the UEs in the set of UEs to be served in the given time slot based on processing allocation of frequency domain resources for a second subset of the RAN slices having particular operational states associated therewith.

The System-Level Shared FD Scheduling Stage 430 takes as input the output of the Slice-Specific FD Scheduling Stage 420 (namely, as indicated by box 429, the list of allocated DRBs per UE with corresponding RB allocations and the list of pending DRBs per UE for which RB allocations have not yet been assigned), and a list of shared RAN slices characterized by slice-specific context information (indicated by box 431 and denoted as the SList). The SList includes shared RAN slices as well as hybrid RAN slices for which the dedicated and prioritized resource assignment has already been scheduled. The slice-specific context information for each RAN slice, as described above, may include a set of RAN slice parameters for the RAN slice (e.g., one or more an indication of a RAT of the RAN slice, an indication of a radio resource configuration of the RAN slice (e.g., an amount of radio resources allocated to the RAN slice and a shared priority parameter indicative of a priority of the RAN slice related to other RAN slices), or the like, as well as various combinations thereof). The SList can be sorted in accordance with the shared priority parameter so that resources of the shared resource pool are assigned to the UEs based on the priorities of the RAN slices in the SList.

The System-Level Shared FD Scheduling Stage 430 uses a common system-level scheduler to determine the amount of radio resources to allocate to DRBs of each RAN slice in SList, where the RAN slices are considered in the order of SList that is based on the shared priority parameters of the RAN slices. The System-Level Shared FD Scheduling Stage 430 uses a common system-level scheduler to determine the amount of radio resources to allocate to DRBs of each RAN slice in SList, up to a maximum value bounded by the resource availability within the shared resource pool. The System-Level Shared FD Scheduling Stage 430 ends either when radio resources have been allocated to each of the DRBs of each of the RAN slices in SList or when the shared pool runs out of radio resources available to allocate.

The System-Level Shared FD Scheduling Stage 430 outputs a list of allocated DRBs per UE with corresponding RB allocations (indicated by box 439). From the System-Level Shared FD Scheduling Stage 430, the process 400 then proceeds to execution of the UE-Specific FD Scheduling Stage 440 (denoted herein as the Third Stage or Stage 3).

The UE-Specific FD Scheduling Stage 440 supports assignment of specific frequency domain resources to the UEs based on the allocations of the frequency domain resources to the DRBs of the UEs in the Slice-Specific FD Scheduling Stage 420 and the System-Level Shared FD Scheduling Stage 430. Here, specific frequency domain resources (e.g., specific VRBs) are assigned to the UEs in accordance with the quantities of resources allocated to the UEs in the Slice-Specific FD Scheduling Stage 420 and the System-Level Shared FD Scheduling Stage 430. From the UE-Specific FD Scheduling Stage 440, the process 400 then proceeds to execution of Other Scheduling-Related Operations 450.

The Other Scheduling-Related Operations 450 may include various operations which may be used to complete the assignment of the specific frequency domain resources to the UEs such that the specific frequency domain resources may be used by the UE for communications via the RAN.

It will be appreciated that the process 400 may include various other functions which may support allocation of frequency domain resources of the RAN to the set of UEs based on the FFSF.

FIG. 5 depicts an example embodiment of a portion of the FlexiSLICE Frequency Domain Scheduling Framework configured to support allocation of frequency domain resources of a RAN to a set of user equipments based on a slice-specific frequency domain scheduling stage.

The process 500 is a process for performing slice-specific frequency domain scheduling within the context of the FFSF configured to support allocation of FD resources of a RAN to a set of UEs (e.g., the process 500 may be used to provide the Slice-Specific FD Scheduling Stage 420 of the process 400 of FIG. 4).

The process 500 takes as input the list of UEs to be scheduled in the current time slot (indicated by box 501) and a list of dedicated, prioritized, and hybrid RAN slices characterized by slice-specific context information (indicated by box 502 and denoted as the DPHList). The slice-specific context information for each RAN slice, as described above, may include a set of RAN slice parameters for the RAN slice (e.g., one or more an indication of a RAT of the RAN slice, an indication of a radio resource configuration of the RAN slice (e.g., an amount of radio resources allocated to the RAN slice), a slice-specific scheduling algorithm of the RAN slice (e.g., a proportional fair scheduling algorithm, a round robin scheduling algorithm, a maximum throughput scheduling algorithm, or the like), an indication of a set of radio access network level user plane associations for the respective RAN slice, or the like, as well as various combinations thereof). The DPHList can be sorted in any suitable manner, such that the RAN slices may be processed in any suitable order.

The process 500 performs resource assignment for the RAN slices in the DPHList, proceeding through the RAN slices in the DPHList based on a slice index (e.g., starting with the first RAN slice and then proceeding through the list of RAN slices by incrementing the slice index by one after each pass through the resources assignment steps until the last RAN slice has been processed).

At block 510, for the selected RAN slice, the slice-specific scheduling algorithm associated with the RAN slice is used to assign quantities of RBs to each of the DRBs associated with that RAN slice. The slice-specific scheduling algorithm associated with the RAN slice is used to determine the number of RBs per DRB up to a maximum value that is less than or equal to a sum of dedicated and prioritized resources associated with the RAN slice. From block 510, the process 500 proceeds to block 520.

At block 520, a determination is made as to whether there are any prioritized resources remaining for the RAN slice after the assignment of the RBs to the DRBs for the RAN slice. If there are any prioritized resources remaining for the RAN slice after the assignment of the RBs to the DRBs for the RAN slice, the process 500 proceeds to block 530. If there are not any prioritized resources remaining for the RAN slice after the assignment of the RBs to the DRBs for the RAN slice, the process 500 proceeds to block 540.

At block 530, the unused prioritized resources for the RAN slice are moved to the shared resource pool that is shared by the RAN slices for further allocation of FD resources to the UEs. From block 530, the process 500 proceeds to block 540.

At block 540, a determination is made as to whether the RAN slice currently being processed is the last RAN slice in the DPHList. If the RAN slice currently being processed is not the last RAN slice in the DPHList, then the process increments the slice index by one to select the next RAN slice in the DPHList and returns to block 510 for assignment of FD resources for the next RAN slice. If the RAN slice currently being processed is the last RAN slice in the DPHList, then the process 500 proceeds to block 550.

At block 550, the hybrid RAN slices are moved to the list of shared RAN slices (such that the list of shared RAN slices then includes shared RAN slices as well as hybrid RAN slices for which the dedicated and prioritized resource assignment has already been scheduled) for use in the System-Level Shared FD Scheduling Stage.

The process 500 provides as output a list of allocated DRBs per UE with corresponding RB allocations and a list of pending DRBs per UE for which RB allocations have not yet been assigned (indicated by box 555).

It will be appreciated that the process 500 may be configured to support various other functions to support allocation of frequency domain resources of a RAN to a set of user equipments based on a slice-specific frequency domain scheduling stage.

FIG. 6 depicts an example embodiment of a portion of the FlexiSLICE Frequency Domain Scheduling Framework configured to support allocation of frequency domain resources of a RAN to a set of user equipments based on a system-level shared frequency domain scheduling stage.

The process 600 is a process for performing system-level frequency domain scheduling within the context of the FFSF configured to support allocation of FD resources of a RAN to a set of UEs (e.g., the process 600 may be used to provide the System-Level Shared FD Scheduling Stage 430 of the process 400 of FIG. 4).

The process 600 takes as input (1) a list of allocated DRBs per UE with corresponding RB allocations and a list of pending DRBs per UE for which RB allocations have not yet been assigned (indicated by box 601) and (2) a list of shared RAN slices characterized by slice-specific context information (indicated by box 602 and denoted as the SList). The slice-specific context information for each RAN slice, as described above, may include a set of RAN slice parameters for the RAN slice (e.g., one or more an indication of a RAT of the RAN slice, an indication of a radio resource configuration of the RAN slice (e.g., an amount of radio resources allocated to the RAN slice and a shared priority parameter indicative of a priority of the RAN slice related to other RAN slices), or the like, as well as various combinations thereof). The SList can be sorted in accordance with the shared priority parameter so that resources of the shared resource pool are assigned to the UEs based on the priorities of the RAN slices in the SList.

The process 600 performs resource assignment for the RAN slices in the SList, proceeding through the RAN slices in the SList based on a slice index (e.g., starting with the first RAN slice and then proceeding through the list of RAN slices by incrementing the slice index by one after each pass through the resources assignment steps until the last RAN slice has been processed or the shared pool of resources does not have any resources remaining).

At block 610, for the selected RAN slice, the system-level scheduling algorithm is used to assign quantities of RBs to each of the DRBs associated with that RAN slice. The system-level scheduling algorithm associated with the RAN slice is used to determine the number of RBs per DRB up to a maximum value that is less than or equal to the remaining resources (e.g., RBs) in the shared pool of resources (i.e., assignments of RBs to DRBs continues as long as there are still resources available in the shared pool). From block 610, the process 600 proceeds to block 620.

At block 620, shared pool resource availability is updated based on the assignment of resources for the selected RAN slice. From block 620, the method 600 proceeds to block 630.

At block 630, a determination is made as to whether any resources are remaining in the shared resource pool. If there are no resources remaining in the shared resource pool, then the process 600 ends and outputs the list of allocated DRBs per UE with corresponding RB allocations. If there are resources remaining in the shared resource pool, then the process 600 proceeds to block 640.

At block 640, a determination is made as to whether the selected RAN slice is the last slice in the SList. If the RAN slice currently being processed is not the last RAN slice in the SList, then the process increments the slice index by one to select the next RAN slice in the SList and returns to block 610 for assignment of FD resources for the next RAN slice. If the RAN slice currently being processed is the last RAN slice in the SList, then the process 600 ends and outputs the list of allocated DRBs per UE with corresponding RB allocations.

The process 600 provides as output a list of allocated DRBs per UE with corresponding RB allocations (indicated by box 645). This provides, for each of the DRBs of each of the UEs, indications of the quantities of RBs allocated to DRBs, respectively, which may then be used as a basis for allocation of the specific FD resources to the UEs for use by the UEs to communicate via the RAN (e.g., using the UE-Specific FD Scheduling Stage 440 of the process 400 of FIG. 4).

It will be appreciated that the process 600 may be configured to support various other functions to support allocation of frequency domain resources of a RAN to a set of user equipments based on a system-level frequency domain scheduling stage.

As illustrated in FIG. 2, the FSM RAN Function 230 is configured to support various aspects of the FlexiSLICE programmable RAN slicing framework 202. The FSM RAN Function 230 is configured to support O-RAN-related operations pertaining to the RAN slicing. For example, such O-RAN-related operations include translating RIC Control Requests from the FSM Mediation xApp 270 on the controller 205 to FlexiSLICE API configuration requests, handling of RIC Subscription Requests (e.g., including, but not limited to, the Report, Insert, and/or Policy service actions), creation of RIC Indication messages by obtaining relevant statistics from the FlexiSLICE Context 210 through FlexiSLICE API statistics requests, or the like, as well as various combinations thereof.

The FSM RAN Function 230 is configured to support operation of the RAN slice state machine (e.g., RAN slice state machine 300) and interactions with the FlexiSLICE Context 210 based on a set of FlexiSLICE APIs. The set of FlexiSLICE APIs may include a FlexiSLICE Control API (e.g., configured to support configuration of one or more parameters within the FlexiSLICE Context 210 relating to one or more slices and/or UEs) and a set of FlexiSLICE Telemetry APIs (e.g., configured to support telemetry registration requests, receipt of statistics based on telemetry requests, targeted requests for statistics, and so forth).

The set of FlexiSLICE Telemetry APIs may include a FlexiSLICE Telemetry Registration Request API. The FlexiSLICE Telemetry Registration Request API may be used by the FSM RAN Function 230 to register statistics requests with the FlexiSLICE context 210 from the FSM Mediation xApp 270. As part of the request, the FSM RAN Function 230 may provide the target resources (e.g., slices and/or UEs) along with a corresponding telemetry trigger (e.g., periodic or event-specific).

The set of FlexiSLICE Telemetry APIs may include a FlexiSLICE Statistics Request API. The FlexiSLICE Statistics Request API, upon detection of an event trigger, is used by the FSM RAN Function 203 to obtain specific statistics-related parameters associated with specific slices and/or UEs.

The set of FlexiSLICE Telemetry APIs may include a FlexiSLICE Context Change Request API. The FlexiSLICE Context Change Request API, upon detection of an event trigger, is used by the FSM RAN Function 230 to obtain specific information about the 3GPP or non-3GPP procedure responsible for the context change.

The set of FlexiSLICE APIs, in addition to the FlexiSLICE Telemetry APIs, also includes a FlexiSLICE Control API. The FlexiSLICE Control API may include a FlexiSLICE Control Request API. The FlexiSLICE Control Request API may be used by the FSM RAN Function 230 to adjust parameters within the FlexiSLICE Context 210 relating to one or more slices and/or UEs. The parameters are based on RAN slice characterization defined herein.

It will be appreciated that the FlexiSLICE APIs, while primarily described as being used by the FSM RAN Function 230 to execute directives from as well obtain telemetry data for the FSM Mediation xApp 270 (on the near-RT RIC), also may be leveraged by other entities (e.g., the non-RT RIC, vendor-specific control and management entities, or the like, as well as various combinations thereof) for various purposes. Accordingly, definition and implementation of the FlexiSLICE APIs is decoupled from the O-RAN specification to allow for maximum portability and reusability (although it will be appreciated that integration of various aspects with the O-RAN specification may be supported in certain situations).

It will be appreciated that the FSM RAN Function 230 may be configured to perform various other functions for supporting various aspects of the FlexiSLICE programmable RAN slicing framework 202.

As illustrated in FIG. 2, the O-RAN E2 Agent 240, which is disposed on the BS 203, is configured to support communication between the BS 203 and the controller 205 within the context of O-RAN and via the E2 interface 204 between the BS 203 and the controller 205. It will be appreciated that the O-RAN E2 Agent 240 may be configured to perform various other functions for supporting various aspects of the FlexiSLICE programmable RAN slicing framework 202.

As illustrated in FIG. 2, the Near-RT RIC Internal Messaging Infrastructure With E2 Terminator 250, which is disposed on the controller 205, is configured to support communication between the controller 205 and the BS 203 within the context of O-RAN and via the E2 interface 204 between the controller 205 and the BS 203. It will be appreciated that the Near-RT RIC Internal Messaging Infrastructure With E2 Terminator 250 may be configured to perform various other functions for supporting various aspects of the FlexiSLICE programmable RAN slicing framework 202.

As illustrated in FIG. 2, the Near-RT RIC Internal Components 260 are configured to support various functions of the FlexiSLICE programmable RAN slicing framework 202. The Near-RT RIC Internal Components 260 are configured to support programmatic control over configuration of RAN slices within the RAN in a dynamic manner, obtaining of near-real time slice statistics from the RAN based on telemetry registration requests to the RAN and receipt of corresponding RAN statistics reports from the RAN, or the like, as well as various combinations thereof. It will be appreciated that the Near-RT RIC Internal Components 260 may be configured to perform various other functions for supporting various aspects of the FlexiSLICE programmable RAN slicing framework 202.

As illustrated in FIG. 2, the FSM Mediation xApp 270 is configured to support various aspects of the FlexiSLICE programmable RAN slicing framework 202. The FSM Mediation xApp 270 is configured to programmatically control configuration of RAN slices within the RAN in a dynamic manner, obtain near-real time slice statistics from the RAN based on telemetry registration requests to the RAN and receipt of corresponding RAN statistics reports from the RAN, or the like, as well as various combinations thereof. The FSM Mediation xApp 270 provides a set of REST APIs to issue RAN slice configuration and statistics requests which are then sent over the E2 interface to the BS 203 to programmatically control configuration of the RAN slices within the BS 203 in a dynamic manner, to receive responses from the BS 203 related to the RAN slice configuration requests and RAN slice statistics requests, or the like, as well as various combinations thereof. It will be appreciated that the FSM Mediation xApp 270 may be configured to perform various other functions for supporting various aspects of the FlexiSLICE programmable RAN slicing framework 202.

As illustrated in FIG. 2, the FlexiSLICE O-RAN Service Model (E2SM-FSM), which is supported by the E2SM-FSM 241 on the O-RAN E2 Agent 240 of the BS 203 and the FlexiSLICE O-RAN Service Model (E2SM-FSM) 271 on the FSM Mediation xApp 270 of the controller 205, is configured to support various aspects of the FlexiSLICE programmable RAN slicing framework 202. The FlexiSLICE O-RAN Service Model (E2SM-FSM) defines the relevant messages that are exchanged between the BS 203 and the controller 205. These messages specify the various configuration parameters supported by the FlexiSLICE RAN slicing framework for supporting dynamic configuration of the RAN slices on the BS 203 by the controller 205, for supporting reporting of statistics related to the RAN slices from the BS 203 to the controller 205, or the like, as well as various combinations thereof.

The FlexiSLICE O-RAN Service Model (E2SM-FSM) is configured to support various interactions between the FlexiSLICE Context 210 within the BS 203 and the FSM Mediation xApp 270 on the controller 205, thereby enabling support for programmable use-case-driven slice control and assurance.

The FlexiSLICE O-RAN Service Model provides support for O-RAN REPORT services and O-RAN CONTROL services. The services may be initiated according to periodic events, RAN slice context change events, or on-demand events. The three event trigger definition systems are described in Table 1, which follows.

**TABLE 1**

| RIC Style Type | Style Name | Supported RIC Service Style | | | Style Description |
|---|---|---|---|---|---|
| | | Report | Insert | Policy | |
| 1 | Periodic Report Event | 1, 2 | - | - | Triggering conditions are based on the configured report period parameter. |
| 2 | RAN Slice Context Change Event | 3 | - | - | Triggering conditions are based on the corresponding RAN slice context change event. |
| 3 | On-Demand | 1, 2 | - | - | One-time trigger upon receipt of RIC Subscription. |

The FlexiSLICE O-RAN Service Model provides selective support of the following REPORT services: (1) the FlexiSLICE slice context report including configuration information and statistics data for one or more RAN slices at the E2 Node, (2) the FlexiSLICE UE context report including RAN slice-related configuration information and statistics data for one or more UEs at the E2 Node, (3) the FlexiSLICE context change report for synchronizing RAN slice-related context between the near-RT RIC and the E2 Node. The REPORT services are described in Table 2, which follows:

**TABLE 2**

| RIC Style Type | Style Name | Style Description |
|---|---|---|
| 1 | FlexiSLICE Slice Context | This style is used to send configuration information and statistics data for one or more RAN slices at the E2 Node. |
| 2 | FlexiSLICE UE Context | This style is used to send RAN slice-related configuration information and statistics data for one or more UEs at the E2 Node. |
| 3 | FlexiSLICE Context Change | This style is used to send FlexiSLICE context change information for synchronizing the RAN slice-related context between the Near-RT RIC and the E2 Node. |

The FlexiSLICE O-RAN Service Model provides selective support of the following CONTROL services: (1) FlexiSLICE slice configuration used to configure RAN slice parameters and (2) FlexiSLICE UE configuration used to configure user-specific RAN slice parameters. The CONTROL services are described in Table 3, which follows:

**TABLE 3**

| RIC Style Type | Style Name | Style Description |
|---|---|---|
| 1 | FlexiSLICE Slice Configuration | This style is used to configure RAN slice parameters at the target E2 Node. |
| 2 | FlexiSLICE UE Configuration | This style is used to configure user-specific RAN slice parameters for one or more users at the target E2 Node. |

The REPORT and CONTROL services defined above are supported by a set of Indication Messages and Control Messages. The Indication Messages and Control Messages are described in Table 4, which follows:

**TABLE 4**

| RIC Service and Style | Action Definition Format | Indication Header Format | Indication Message Format | Call Process ID Format | Control Header Format | Control Message Format |
|---|---|---|---|---|---|---|
| REPORT | | | | | | |
| Style 1 | 1 | 1 | 1 | | | |
| Style 2 | 1 | 1 | 1 | | | |
| Style 3 | 1 | 1 | 2 | | | |
| | | | | | | |

| INSERT | | | | | | |
|---|---|---|---|---|---|---|
| Style 1 | | | | | | |
| | | | | | | |
| CONTROL | | | | | | |
| Style 1 | | | | | 1 | 1 |
| Style 2 | | | | | 1 | 1 |
| | | | | | | |

| POLICY | | | | | | |
|---|---|---|---|---|---|---|
| Style 1 | | | | | | |
| | | | | | | |

Within the context of FSM, the RIC Indication Message can take one of two formats: *E2SM-FSM Indication Message Format 1* and *E2SM-FSM Indication Message Format 2.*

The *E2SM-FSM Indication Message Format 1* can carry either the *FlexiSLICE Slice Context Container* or the *FlexiSLICE UE Context Container.*

The *FlexiSLICE Slice Context Container* includes a list of slices for which the Indication message is being sent along with, for each slice in the list of slices, the relevant context for that slice. For a given RAN slice, *FlexiSLICE Slice Context Container* may include the following parameters:
- Slice ID: Defined in terms of the S-NSSAI.
- Slice RAT: LTE, NRNSA, or NR SA.
- Slice State: Idle, Dedicated, Prioritized, Shared, or Hybrid.
- CU-UP Transport Layer Association: List of CU-UPs carrying user plane traffic for DRBs associated with this slice.
- Slice Scheduler: Scheduling algorithm being for allocating radio resources to DRBs associated with this slice.
- Slice Resource Configuration: The downlink and uplink radio resource assignment for this slice in terms of dedicated and prioritized resources, along with a shared priority parameter where applicable.
- Last Known FlexiSLICE Context Change Event: Relevant 3GPP or FSM procedure responsible for change in the FlexiSLICE context associated with this slice.
- Associated Bearer List: List of DRBs associated with this slice along with the following metrics.
   ∘ DRB ID: RAN-level identifier for this bearer.
   ∘ UE ID: E2AP UE ID for the corresponding UE.
   ∘ RAN Priority: Priority metric to differentiate DRBs in the same slice having the same CQI.
   ∘ Downlink Throughput: Average downlink throughput associated with the DRB as measured at the RLC layer.
   ∘ Downlink Packet Delay: Average downlink packet delay associated with the DRB including air interface delay.
   ∘ Downlink Packet Loss Rate: Average downlink packet loss rate associated with the DRB including packets dropped at the PDCP and RLC, packets lost over F1-U (if applicable), and packets dropped due to maximum retransmissions being exceeded.
   ∘ Uplink Throughput: Average uplink throughput associated with the DRB as measured at the RLC layer.
   ∘ Uplink Packet Delay: Average uplink packet delay associated with the DRB including air interface delay.
   ∘ Uplink Packet Loss Rate: Average uplink packet loss rate associated with the DRB including packets dropped at the PDCP and packets lost over F1-U (if applicable).
   ∘ RLC Buffer Occupancy: RLC buffer occupancy across logical channels associated with the DRB.

The *FlexiSLICE UE Context Container* includes a list of UEs for which the Indication message is being sent along with, for each UE in the list of UEs, the relevant context for that UE. For a given UE, *FlexiSLICE UE Context Container* may include the following parameters:
- UE ID: E2AP UE ID for the corresponding UE.
- UE RAT: LTE, NRNSA, or NR SA.
- Last Known FlexiSLICE Context Change Event: Relevant 3GPP or FSM procedure responsible for change in the FlexiSLICE context associated with this UE.
- Downlink Modulation and Coding Scheme (MCS): MCS associated for transmissions on the PDSCH for this UE.
- Uplink Modulation and Coding Scheme (MCS): MCS associated for transmissions on the PUSCH for this UE.
- Wideband CQI: Wideband Channel Quality Indicator (CQI) for this UE.
- Associated Bearer List: List of DRBs associated with this UE along with the following metrics.
   ∘ Slice ID: Defined in terms of the S-NSSAI.
   ∘ Slice State: Idle, Dedicated, Prioritized, Shared, or Hybrid.
   ∘ RAN Priority: Priority metric to differentiate DRBs in the same slice having the same CQI
   ∘ Downlink Throughput: Average downlink throughput associated with the DRB as measured at the RLC layer.
   ∘ Downlink Packet Delay: Average downlink packet delay associated with the DRB including air interface delay.
   ∘ Downlink Packet Loss Rate: Average downlink packet loss rate associated with the DRB including packets dropped at the PDCP and RLC, packets lost over F 1-U (if applicable), and packets dropped due to maximum retransmissions being exceeded.
   ∘ Uplink Throughput: Average uplink throughput associated with the DRB as measured at the RLC layer.
   ∘ Uplink Packet Delay: Average uplink packet delay associated with the DRB including air interface delay.
   ∘ Uplink Packet Loss Rate: Average uplink packet loss rate associated with the DRB including packets dropped at the PDCP and packets lost over F 1-U (if applicable).
   ∘ RLC Buffer Occupancy: RLC buffer occupancy across logical channels associated with the DRB.

The *E2SM-FSM Indication Message Format 2* carries the *FlexiSLICE Slice Context Change Container.*

The *FlexiSLICE Slice Context Change Container* includes a list of slices for which the Indication message is being sent along with, for each slice in the list of slices, the corresponding change in the slice context. For a given RAN slice, *FlexiSLICE Slice Context Change Container* contains the following parameters.
- Slice ID: Defined in terms of the S-NSSAI.
- Triggering Event: Corresponding 3GPP or FSM event responsible for change in the FlexiSLICE context.
- Context Change Outcome: Change in the FlexiSLICE context addressing the following parameters.
   ∘ CU-UP Transport Layer Association: Addition or removal of CU-UPs associated with this slice.
   ∘ Slice Scheduler: Change in the FD scheduling algorithm to be used for this slice.
   ∘ Slice Resource Configuration: Change in the radio resource assignment for this slice.
   ∘ Associated Bearer List: Addition, removal, or modification of DRBs associated with this slice.

Similarly, the RIC Control Message is represented by *E2SM-FSM Control Message Format 1* which carries either the *FlexiSLICE Slice Configuration Container* or the *FlexiSLICE UE Configuration Container.*

For the RIC Control Message, the *FlexiSLICE Slice Configuration Container* defines a list of slices for which FlexiSLICE-related context is to be modified, and includes the following parameters:
- Slice ID: Defined in terms of the S-NSSAI.
- Slice State: For configuring the operational state of this slice. Must be one of Idle, Dedicated, Prioritized, Shared, or Hybrid.
- Incoming CU-UP Transport Layer Association: Specific CU-UP to be used for the next DRB that is associated with this slice.
- Slice Scheduler: For configuring the FD scheduling algorithm to be used for this slice.
- Slice Resource Configuration: For configuring the downlink and uplink radio resource assignment for this slice.

For the RIC Control Message, the *FlexiSLICE UE Configuration Container* defines a list of UEs for which FlexiSLICE-related context is to be modified, and includes the following parameters:
- UE ID: E2AP UE ID for the corresponding UE.
- DRB ID: DRB ID for which the configuration change is to be made.
- RAN Priority: For configuring the RAN Priority of the DRB for which the context change is being requested.

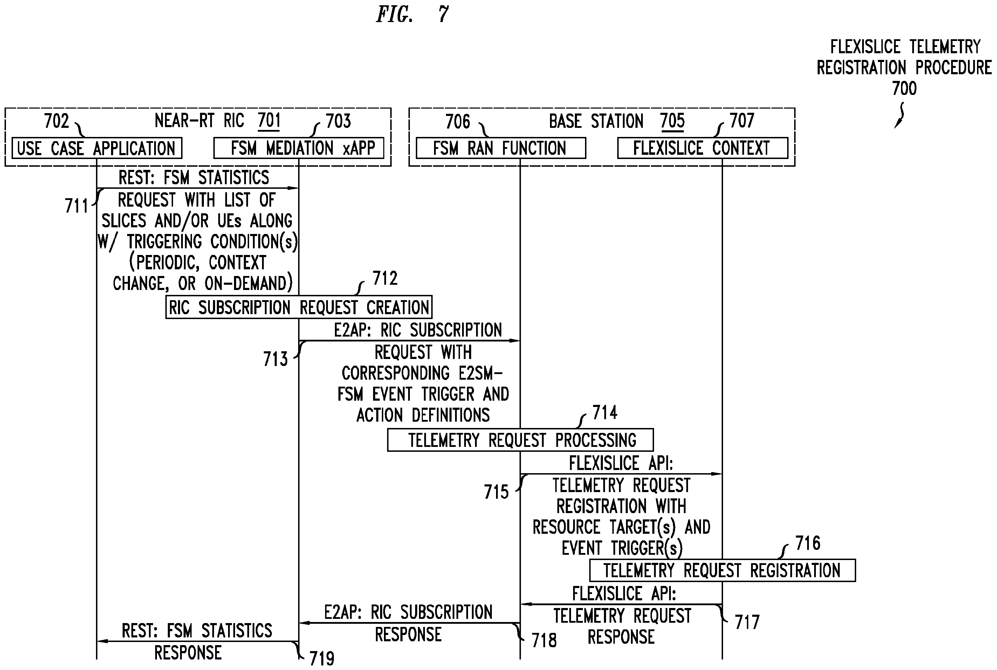

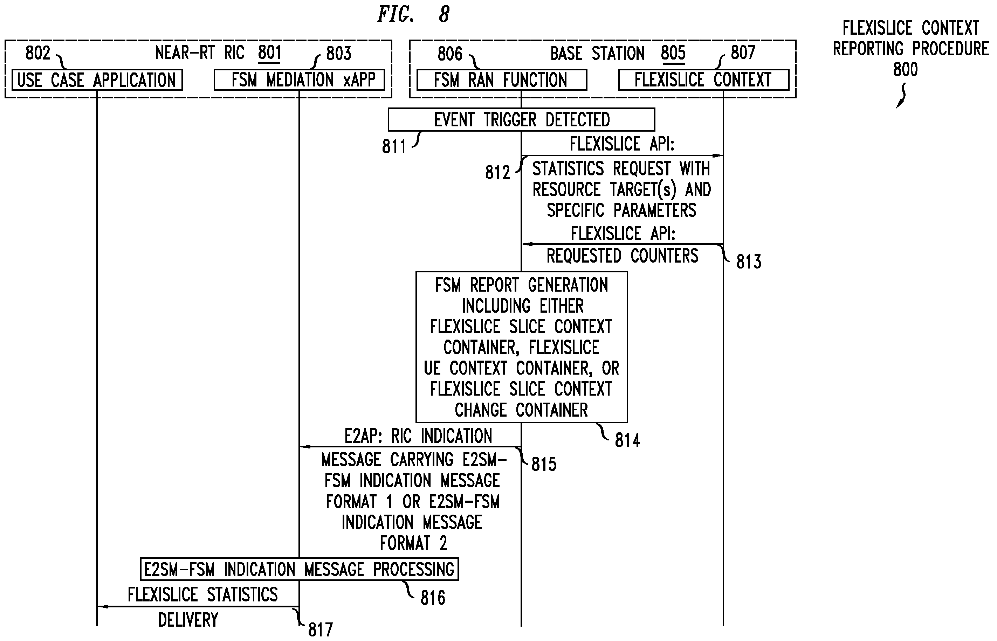

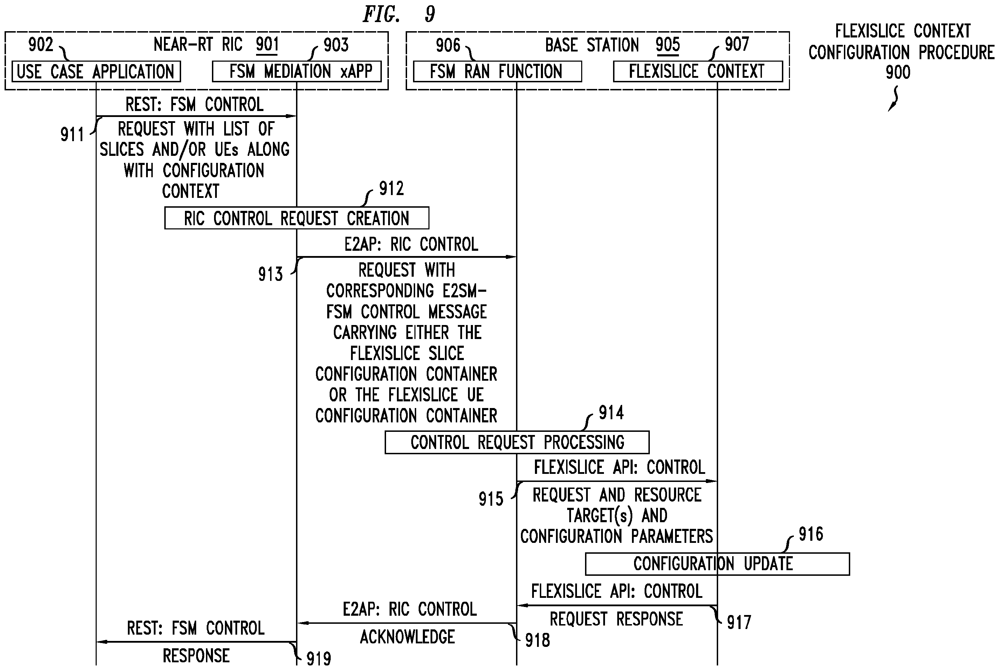

The FlexiSLICE O-RAN Service Model, including the E2SM-FSM parameters and messages supported between the BS 203 and the controller 205 along with the FlexiSLICE API supported on the BS 203, enable a variety of procedures within the overall FlexiSLICE framework. The procedures includes a FlexiSLICE Telemetry Registration procedure (presented with respect to FIG. 7) whereby the controller 205 can register a telemetry request with the BS 203, a FlexiSLICE Context Reporting procedure (presented with respect to FIG. 8) whereby the BS 203 can report statistics to the controller 205 based on telemetry requests from the controller 205, and a FlexiSLICE Context Configuration procedure (presented with respect to FIG. 9) whereby the controller 205 can control dynamic configuration of RAN slices on the BS 203. It will be appreciated that each of these procedures is discussed further below.

FIG. 7 depicts an example embodiment of a FlexiSLICE Telemetry Registration procedure 700 for use within the FlexiSLICE framework. The FlexiSLICE Telemetry Registration procedure 700 may be used to obtain slice-level statistics and UE-level statistics as they relate to the FlexiSLICE framework for use cases such as RAN slice assurance.

As illustrated in FIG. 7, the FlexiSLICE Telemetry Registration procedure 700 includes operations performed by a Near-RT RIC 701 (and, more specifically, by a Use Case Application 702 and an FSM Mediation xApp 703 of the Near-RT RIC 701) and operations performed by a BS 705 (and, more specifically, by a FSM RAN Function 706 and an FlexiSLICE Context X07 of the BS 705). The FSM Mediation xApp 703 exposes a set of REST APIs, which may be leveraged by consumers (such as use case applications, including the Use Case Application 702) to issue statistics requests.

At step 711, the Use Case Application 702 initiates a REST-based FSM Statistics Request Message, which is provided to the FSM Mediation xApp 703. The REST-based FSM Statistics Request Message includes a list of slices and/or UEs for which the statistics are being requested, along with the corresponding triggering condition (e.g., periodic, context change, or on-demand).

At step 712, the FSM Mediation xApp 703 uses the contents of the REST-based FSM Statistics Request Message to create the corresponding RIC Subscription Request message. The contents of RIC Subscription Request message are in line with the E2SM-FSM service model, with the E2SM-FSM Event Trigger being one of *Periodic Report Event, RAN Slice Context Change Event,* or *On-demand,* along with a corresponding Report Action, i.e., *FlexiSLICE Slice Context, FlexiSLICE UE Context,* or *FlexiSLICE Context Change.*

At step 713, the FSM Mediation xApp 703 sends the RIC Subscription Request message to the FSM RAN Function 706 within the BS 705.

At step 714, the FSM RAN Function 706 performs telemetry request processing based on the RIC Subscription Request message. The FSM RAN Function 706 performs telemetry request processing to identify the slice(s) and UE(s) for which the statistics are being requested, i.e., the relevant resource targets and event triggers.

At step 715, the FSM RAN Function 706 invokes the FlexiSLICE Telemetry Request Registration API to send a Telemetry Request Registration to the FlexiSLICE Context 707. The Telemetry Request Registration includes the Resource Target(s) and the Event Trigger(s), i.e., the slice(s) and UE(s) for which the statistics are being requested and the associated event trigger(s) which triggered the request.

At step 716, the FlexiSLICE Context 707 registers the statistics requested based on the Telemetry Request Registration from the FSM RAN Function 706. It will be appreciated that, once the telemetry request has been registered and activated, the BS 705 begins to monitor the associated event trigger.

At step 717, the FlexiSLICE Context 707 invokes the FlexiSLICE Telemetry Request Registration API to send a Telemetry Request Response to the FSM RAN Function 706.

At step 718, the FSM RAN Function 706 sends the RIC Subscription Response message to the FSM Mediation xApp 703 within the Near-RT RIC 701.

At step 719, the FSM Mediation xApp 703 initiates a REST-based FSM Statistics Response Message, based on the RIC Subscription Response message, which is provided to the Use Case Application 702.

It will be appreciated that the FlexiSLICE Telemetry Registration procedure 700 may include various other functions, signaling, or the like, as well as various combinations thereof.

FIG. 8 depicts an example embodiment of a FlexiSLICE Context Reporting procedure for use within the FlexiSLICE framework. The FlexiSLICE Context Reporting procedure may be initiated upon detection of an event trigger (periodic or otherwise) that is associated with an active telemetry request.

As illustrated in FIG. 8, the FlexiSLICE Context Reporting procedure 800 includes operations performed by a Near-RT RIC 801 (and, more specifically, by a Use Case Application 802 and an FSM Mediation xApp 803 of the Near-RT RIC 801) and operations performed by a BS 805 (and, more specifically, by a FSM RAN Function 806 and an FlexiSLICE Context 807 of the BS 805). The FSM Mediation xApp 803 exposes a set of REST APIs, which may be leveraged by consumers (such as use case applications, including the Use Case Application 802) to issue statistics requests.

At step 811, the FSM RAN Function 806 detects an event trigger. The event trigger (periodic or otherwise) may be associated with an active telemetry request.

At step 812, the FSM Ran Function 806 issues a Statistics Request to the FlexiSLICE Context 807 via the FlexiSLICE API. The Statistics Request includes information about the Target(s) of the request (e.g., slices and/or UEs for which the statistics are being requested) and the Specific Parameter(s) of the request (e.g., one or more parameters for which statistics are being requested).

At step 813, the FlexiSLICE Context 807 delivers the counters (for the requested statistics) to FSM Ran Function 806 over the FlexiSLICE API.

At step 814, the FlexiSLICE Context 807 generates the FSM Report including the requested statistics. The FSM Report may include the *FlexiSLICE Slice Context Container,* the *FlexiSLICE UE Context Container,* or the *FlexiSLICE Slice Context Change Container.*

At step 815, the FlexiSLICE Context 807 encapsulates the FSM Report within an E2AP RIC Indication Message for delivery to the FSM Mediation xApp 803 of the Near-RT RIC 801. The E2AP RIC Indication Message may use the E2SM-FSM Indication Message Format 1 or the E2SM-FSM Indication Message Format 2.

At step 816, the FSM Mediation xApp 803 processes the FSM Report within the E2AP RIC Indication Message.

At step 817, the FSM Mediation xApp 803 delivers the statistics from the FSM Report to the Use Case Application 802.

It will be appreciated that the FlexiSLICE Context Reporting procedure 800 may include various other functions, signaling, or the like, as well as various combinations thereof.

FIG. 9 depicts an example embodiment of a FlexiSLICE Context Configuration procedure for use within the FlexiSLICE framework. The FlexiSLICE Context Configuration procedure may be used to support configuration of contexts.

As illustrated in FIG. 9, the FlexiSLICE Context Configuration procedure 900 includes operations performed by a Near-RT RIC 901 (and, more specifically, by a Use Case Application 902 and an FSM Mediation xApp 903 of the Near-RT RIC 901) and operations performed by a BS 905 (and, more specifically, by a FSM RAN Function 906 and an FlexiSLICE Context 907 of the BS 905). The FSM Mediation xApp 903 exposes a set of REST APIs, which may be leveraged by consumers (such as use case applications, including the Use Case Application 902) to issue control requests.

At step 911, the Use Case Application 902 initiates a REST-based FSM Control Request Message, which is provided to the FSM Mediation xApp 903. The REST-based FSM Control Request Message includes a list of slices and/or UEs for context configuration is being requested, along with the corresponding configuration context.

At step 912, the FSM Mediation xApp X03 maps the REST-based FSM Control Request Message to the corresponding RIC Control Request message to create the corresponding RIC Control Request message. The contents of RIC Control Request message are in line with the E2SM-FSM service model, with RIC Control Request message carrying either the *FlexiSLICE Slice Configuration Container* or the *FlexiSLICE UE Configuration Container.*

At step 913, the FSM Mediation xApp 903 sends the RIC Control Request message to the FSM RAN Function 906 within the BS 905.

At step 914, the FSM RAN Function 906 performs control request processing based on the RIC Control Request message. The FSM RAN Function 906 performs control request processing to identify the slice(s) and UE(s) for which the context is being updated, i.e., the relevant resource targets and configuration parameters.

At step 915, the FSM RAN Function 906 invokes the FlexiSLICE Control Request API to send a Control Request to the FlexiSLICE Context 907. The Control Request includes the Resource Target(s) and the Configuration Parameter(s), i.e., the slice(s) and UE(s) for which the context is being updated and the configuration parameters for the context update.

At step 916, the FlexiSLICE Context 907 performs the configuration update based on the Control Request from the FSM RAN Function 906.

At step 917, the FlexiSLICE Context 907 invokes the FlexiSLICE Control Request Response API to send a Control Request Response to the FSM RAN Function 906.

At step 918, the FSM RAN Function 906 sends the RIC Control Acknowledgment message to the FSM Mediation xApp 903 within the Near-RT RIC 901.

At step 919, the FSM Mediation xApp 903 initiates a REST-based FSM Control Response Message, based on the RIC Control Acknowledgement message, which is provided to the Use Case Application 902.

It will be appreciated that the FlexiSLICE Context Configuration procedure 900 may include various other functions, signaling, or the like, as well as various combinations thereof.

It will be appreciated that inclusion of the E2SM specification does not preclude the use of FlexiSLICE by other external management and control entities using other types of interfaces (e.g., other standardized interfaces such as O1, vendor proprietary interfaces, or the like, as well as various combinations thereof). Accordingly, various features presented herein could be leveraged by any kind of network control system.

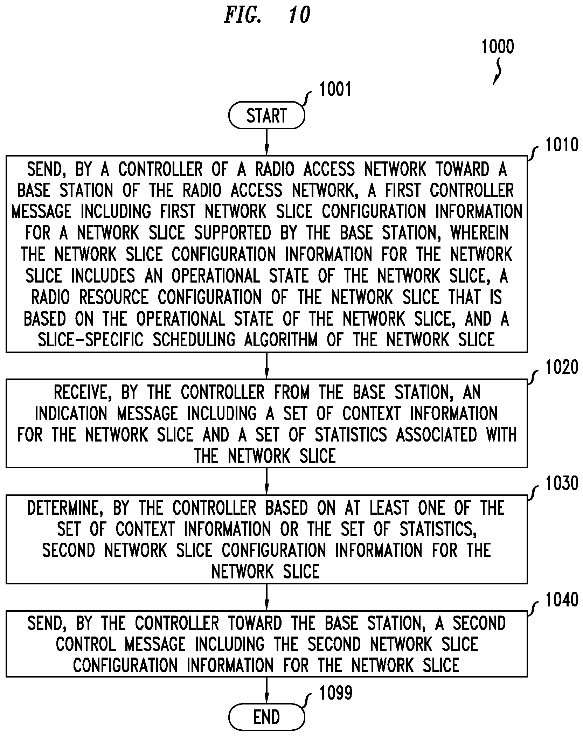

FIG. 10 depicts an example embodiment of a method for use by a controller to support network slicing in a RAN. It will be appreciated that, although primarily presented herein as being performed serially, at least a portion of the functions of method 1000 may be performed contemporaneously or in a different order than as presented in FIG. 10. At block 1001, the method 1000 begins. At block 1010, send, by a controller of a RAN toward a BS of the RAN, a first control message including first network slice configuration information for a network slice supported by the BS, wherein the network slice configuration information for the network slice includes an operational state of the network slice, a radio resource configuration of the network slice that is based on the operational state of the network slice, and a slice-specific scheduling algorithm of the network slice. At block 1020, receive, by the controller from the BS, an indication message including a set of context information for the network slice and a set of statistics associated with the network slice. At block 1030, determine, by the controller based on at least one of the set of context information or the set of statistics, second network slice configuration information for the network slice. At block 1040, send, by the controller toward the BS, a second control message including the second network slice configuration information for the network slice. At block 1099, the method 1000 ends.

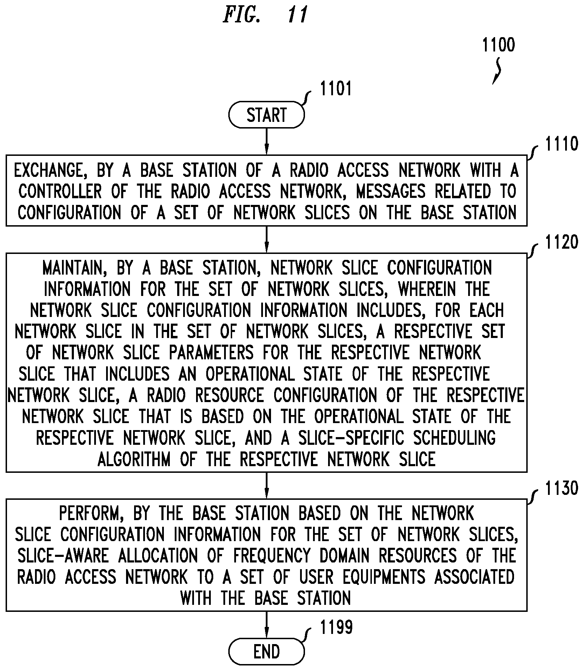

FIG. 11 depicts an example embodiment of a method for use by a BS to support network slicing in a RAN. It will be appreciated that, although primarily presented herein as being performed serially, at least a portion of the functions of method 1100 may be performed contemporaneously or in a different order than as presented in FIG. 11.

At block 1101, the method 1100 begins.

At block 1110, exchange, by a BS of a RAN with a controller of the RAN, messages related to configuration of a set of network slices on the BS.

The base station may support a set of services between the BS and the controller based on a set of message types.

The set of services may include a set of report services, and the set of report services includes at least one of a slice context report including configuration information and statistics data at the BS for one or more of the network slices, a UE context report including slice-related configuration information and statistics data at the BS for one or more of the UEs, or a context change report for synchronizing slice-related context between the controller and the BS.

The set of services includes a set of control services, wherein the set of control services includes at least one of a slice configuration service for configuring at least one of the network slice parameters for one or more of the network slices or a UE configuration service for configuring UE specific slice parameters.

The set of message types may include at least one of an indication message or a control message.

The set of message types may include an indication message that includes a slice context container, wherein the slice context container may include, for each of one or more network slices, a respective context for the respective network slice that is defined based on a set of parameters, wherein the set of parameters includes one or more of a slice identifier for the network slice, a radio access technology of the network slice, a slice state of the network slice, a central unit - user plane (CU-UP) transport layer association of the network slice, a scheduling algorithm for the network slice, a slice resource configuration for the network slice, a last known context change event for the network slice, or a list of data radio bearers associated with the network slice.

The list of data radio bearers associated with the network slice may include, for each of the data radio bearers associated with the network slice, a respective set of parameters associated with the respective data radio bearer including one or more of a network level identifier for the bearer, a UE identifier for the corresponding UE of the data radio bearer, a priority metric, a downlink throughput, a downlink packet delay, a downlink packet loss rate, an uplink throughput, an uplink packet delay, an uplink packet loss rate, or a buffer occupancy.

The set of message types may include an indication message that includes a UE context container, wherein the UE context container may include, for each of one or more UEs, a respective context for the respective UE that is defined based on a set of parameters, wherein the set of parameters includes one or more of a UE identifier for the UE, a radio access technology of the UE, a last known context change event for the UE, a downlink modulation or coding scheme for the UE, an uplink modulation or coding scheme for the UE, a wideband channel quality indicator for the UE, or a list of data radio bearers associated with the UE.

The list of data radio bearers associated with the UE may include, for each of the data radio bearers associated with the network slice, a respective set of parameters associated with the respective data radio bearer including one or more of a slice identifier, a slice state, a priority metric, a downlink throughput, a downlink packet delay, a downlink packet loss rate, an uplink throughput, an uplink packet delay, an uplink packet loss rate, or a buffer occupancy.

The set of message types may include an indication message that includes a slice context change container, wherein the slice context change container may include, for each of one or more network slices for which the indication message is being sent, a respective set of parameters describing a change in a slice context of the respective network slice, wherein the respective set of parameters describing the change in the slice context of the respective network slice includes a slice identifier of the respective network slice, a triggering event responsible for the change in the slice context of the respective network slice, and a context change description for the change in the slice context of the respective network slice, wherein the context change description for the change in the slice context of the respective network slice includes one or more of a central unit - user plane (CU-UP) transport layer association for the respective network slice, a scheduling algorithm associated with the respective network slice, an indication of a change in radio resource assignment for the respective network slice, or a bearer list for the respective network slice.

The set of message types may include a control message that includes a slice configuration container for a network slice for which a slice context is being modified, wherein the slice configuration container may include at least one of a slice identifier of the network slice, a slice state of the network slice, a central unit - user plane (CU-UP)transport layer association for the network slice, a slice scheduling algorithm for the network slice, or a resource configuration for the network slice.

The set of message types may include a control message that includes a UE configuration container for a UE for which a UE context is being modified, wherein the UE configuration container may include at least one of a UE identifier of the UE, a data radio bearer identifier of a data radio bearer of the UE for which context is being modified, or a priority indicator of the data radio bearer of the UE for which context is being modified.

The BS may receive, from the controller, a control request related to configuration of one or more of the network slices, translate, based on an application programming interface, the control request into a configuration request for configuration of the one or more of the network slices, and support, based on the configuration request, configuration of the one or more network slices based on modification of the network slice configuration information.

The BS may receive, from the controller, a telemetry subscription request indicative of a request by the controller to receive slice statistics associated with one or more of the network slices, translate, based on an application programming interface, the telemetry subscription request into a telemetry registration request configured to register the request by the controller to receive the slice statistics associated with the one or more of the network slices, and support, by the BS based on the telemetry registration request, registration of the request by the controller to receive the slice statistics associated with the one or more of the network slices.

The BS may detect, based on registration of a request by the controller to receive slice statistics associated with the one or more of the network slices, a trigger condition, obtain, in response to the trigger condition and based on an application programming interface, a set of slice statistics associated with the one or more of the network slices, ad send, toward the controller, an indication message including the set of slice statistics associated with the one or more of the network slices.

At block 1120, maintain, by the BS, network slice configuration information for the set of network slices, wherein the network slice configuration information includes, for each network slice in the set of network slices, a respective set of network slice parameters for the respective network slice that includes an operational state of the respective network slice, a radio resource configuration of the respective network slice that is based on the operational state of the respective network slice, and a slice-specific scheduling algorithm of the respective network slice.

The BS may support, for at least one of the network slices based on one or more control messages from the controller, configuration of the respective set of network slice parameters for the network slice to meet a set of requirements of a use case served by the RAN.

The operational state of the respective network slice may be based on a set of operational states supported for the set of network slices, wherein the set of operational states includes an idle state, a dedicated state, a prioritized state, a shared state, and a hybrid state.

The radio resource configuration of the respective network slice may be based on the operational state of the respective network slice, where the respective network slice is in the dedicated state and the radio resource configuration includes an indication of a quantity of radio resources dedicated to the respective network slice, the respective network slice is in the prioritized state and the radio resource configuration includes an indication of a quantity of radio resources to which the respective network slice has priority access, the respective network slice is in the shared state and the radio resource configuration includes an indication of a shared priority parameter indicative of a priority level of the respective network slice for access to a shared pool of radio resources, or the respective network slice is in the hybrid state and the radio resource configuration includes a dedicated radio resource configuration indicative of a quantity of radio resources dedicated to the respective network slice, a prioritized radio resource configuration indicative of a quantity of radio resources to which the respective network slice has priority access, and a shared priority parameter indicative of a priority level of the respective network slice for access to a shared pool of radio resources.

At block 1130, perform, by the BS based on the network slice configuration information for the set of network slices, slice-aware allocation of frequency domain resources of the RAN to a set of UEs associated with the BS.

The slice-specific scheduling algorithm of the respective network slice may include one of a proportional fair scheduling algorithm, a round robin scheduling algorithm, or a maximum throughput scheduling algorithm.

The set of network slice parameters, for each network slice in the set of network slices, may include at least one of an indication of a radio access technology of the respective network slice or a set of RAN-level user plane associations for the respective network slice.

The operational state of the respective network slice, for at least one of the network slices in the set of network slices, may be based on an event-driven network slice state machine supporting an idle state in which the respective network slice does not have any data radio bearers assigned thereto, a dedicated state in which the respective network slice has a set of dedicated radio resources assigned thereto, a prioritized state in which the respective network slice has priority access to a set of radio resources assigned to the respective network slice and unused ones of the radio resources assigned to the respective network slice are allocated to a shared pool of radio resources, a shared state in which the respective network slice does not have an explicit assignment of radio resources and has access to a shared pool of radio resources based on a priority of the respective network slice, and a hybrid state in which the respective network slice includes a dedicated radio resource configuration, a prioritized radio resource configuration, and a shared priority parameter.

The slice-aware allocation of frequency domain resources of the RAN to the set of UEs of the RAN may be based on allocation of frequency domain resources to data radio bearers of the UEs based on the respective operational states of the respective network slices, the respective radio resource configurations of the respective network slices, and the respective slice-specific scheduling algorithms of the respective network slices.

The slice-aware allocation of frequency domain resources of the RAN to the set of UEs of the RAN may be based on a first scheduling stage, based on slice-specific scheduling of frequency domain resources to the UEs, to provide a first resource allocation for the set of UEs, a second scheduling stage, based on system-level scheduling of shared frequency domain resources to the UEs, to provide a second resource allocation for the set of UEs, and a third scheduling stage in which virtual resource blocks are assigned to data radio bearers of the UEs based on the first resource allocation for the set of UEs and the second resource allocation for the set of UEs.

The slice-aware allocation of frequency domain resources of the RAN to the set of UEs of the RAN may be performed by determining, for each network slice in the set of network slices, a respective set of data radio bearers of the set of UEs associated with the respective network slice and determining, for each UE in the set of the UEs based on slice-aware scheduling based on the set of network slices, a respective set of virtual resource blocks assigned to the respective UE.

The determination, for each UE in the set of the UEs based on slice-aware scheduling based on the set of network slices, of the respective set of virtual resource blocks assigned to the respective UE may include determining, for each network slice in a first subset of network slices that includes ones of the network slices in a dedicated state, a prioritized state, or a hybrid state, a first resource allocation indicative of a respective number of radio bearers to allocate to each data radio bearer associated with the respective network slice, determining, for each network slice in a second subset of network slices including ones of the network slices in the hybrid state or a shared state, a second resource allocation indicative of a number of radio bearers to allocate to each data radio bearer associated with the respective network slice, and determining, for each UE in the set of the UEs based on the first resource allocation and the second resource allocation, allocation of the respective set of virtual resource blocks to the respective UE.

The first resource allocation may be determined based on respective slice-specific scheduling algorithms applied for the respective ones of the network slices in the first subset of network slices, wherein the second resource allocation is determined based on a system-level scheduling algorithm applied for the ones of the network slices in the second subset of network slices.

The determination of the first resource allocation may include determining, for each network slice in the first subset of network slices based on the respective slice-specific scheduling algorithm of the respective network slice and the respective radio resource configuration of the respective network slice, the number of radio bearers to allocate to each data radio bearer associated with the respective network slice up to a maximum value for the respective network slice that is constrained by a sum of dedicated resources and prioritized resources associated with the respective network slice, and outputting a list of the data radio bearers of the UEs having radio bearers assigned thereto along with the respective numbers of radio bearers allocated to the respective data radio bearers of the UEs and a list of data radio bearers of the UEs without any radio bearers assigned thereto.

The determination of the second resource allocation may include determining, for each network slice in the second subset of slices based on a system-level scheduling algorithm and the respective radio resource configuration of the respective network slice, the number of radio bearers to allocate to each data radio bearer associated with the respective network slice up to a maximum value bounded by the resource availability within the shared resource pool, and outputting a list of the data radio bearers of the UEs along with the respective numbers of radio bearers allocated to the respective data radio bearers of the UEs.

The determination, for each UE in the set of the UEs based on the first resource allocation and the second resource allocation, of allocation of the respective set of virtual resource blocks to the respective UE may include determining, for each UE in the set of UEs based on the first resource allocation and the second resource allocation, a respective number of radio bearers assigned to each data radio bearer of the respective UE, and assigning, to each UE based on the respective number of radio bearers assigned to each data radio bearer of the respective UE, specific virtual resource blocks for use by each data radio bearer of the respective UE.

The BS may support, based on a set of application programming interfaces, at least one of configuration of the network slices by the controller or collection of operating statistics of the network slices by the controller.

At block 1199, the method 1100 ends.

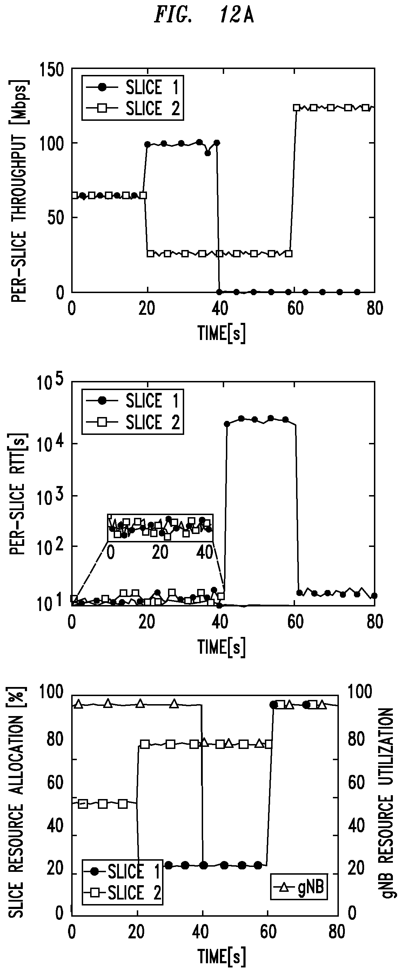

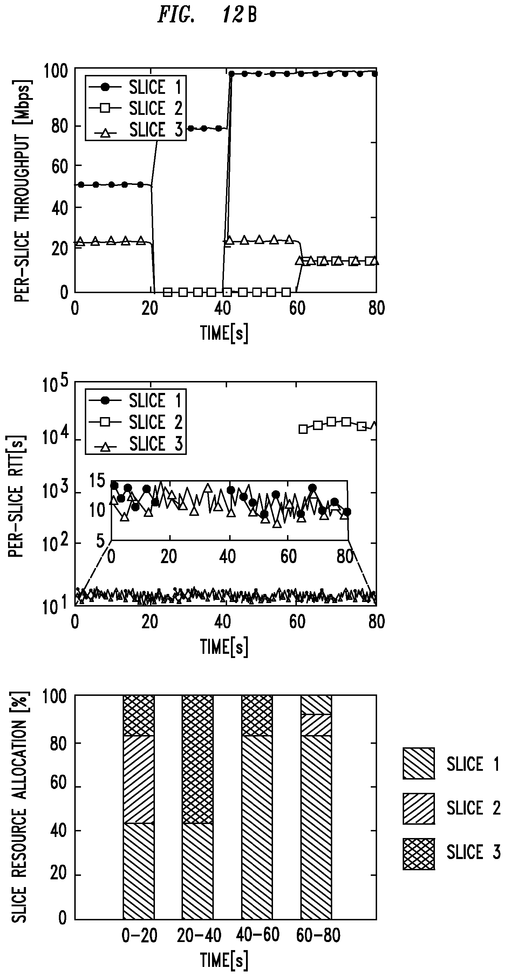

FIGs. 12A and 12B depict results from example implementations of FlexiSLICE within an over-the-air (OTA) experimental network supporting a set of commercial off-the-shelf (COTS) UEs.

FIG. 12A depicts results from a first implementation of FlexiSLICE within an OTA experimental network supporting a number of COTS UEs. In this example, assume deployment of a gNB with 106 RBs that can achieve a maximum downlink throughput of 130 Mbps. In this example, assume that the gNB is configured with two RAN slices, denoted as Slice 1 and Slice 2, that are initially operating in the shared state, thus, that are allocated an equal share of the radio resources, as shown in FIG. 12A. Then, at t = 20 s, in response to a change in the network policy, the FSM Mediation xApp sends a control request that changes the configuration for Slice 2 to dedicated with 85 RBs, causing its throughput to rise to 103 Mbps, at the expense of shared Slice 1. However, since both slices have sufficient resources to meet their respective target throughputs, congestion is not present, as evidenced by the relatively low round-trip time (RTT) values. Next, at t = 40 s, all active users leave Slice 2, causing its traffic to drop to zero, and, at the same time, a second change in the network policy mandates a 130 Mbps downlink throughput for Slice 1. Since Slice 2 is in the dedicated state, its unused resources do not revert to the shared pool. Following from FIG. 12A, it is noted that overall gNB resource utilization falls to 20%, and Slice 1 is not able to increase its throughput beyond 27 Mbps, leading to congestion and a sharp spike in its RTT. To restore performance, at t = 60 s, a second control request from the RIC changes the state of Slice 2 to prioritized. Now, all unused resources from Slice 2 go to the shared pool and, thus, are available to Slice 1. Consequently, Slice 1 is able to achieve its target downlink throughput of 130 Mbps. In this manner, while the dedicated and prioritized states can be used to enforce both resource isolation as well as fine-grained performance requirements, the flexibility to switch between different states ensures that FlexiSLICE is able to adapt to changing network conditions. It is noted that, while wastage of unused resources associated with dedicated slices might lead one to question the utility of the dedicated state, there are various situations in which dedicated slices may be quite useful (as illustrated with respect to the second example described with respect to FIG. 12B, which follows).

FIG. 12B depicts results from a first implementation of FlexiSLICE within an OTA experimental network supporting a number of COTS UEs. In this example, assume deployment of a gNB with 106 RBs that can achieve a maximum downlink throughput of 130 Mbps. In this example, assume that the gNB is configured with three RAN slices as follows: Slice 1 in the dedicated state, Slice 2 in the prioritized state, and Slice 3 in the shared state. As shown in FIG. 12B, from t = 0 - 19s, Slices 1 and 2 are each assigned 40% of the available resources, with the shared pool containing the remaining 20% for Slice 3. With the throughput requirements for each slice being in line with their respective resource assignments, the network does not suffer from congestion. Then, at t = 20s, all active users leave Slices 1 and 2. Slice 1 remains in the dedicated state, while Slice 2 gives up its prioritized resource assignment and switches to the idle state. Thus, Slice 3 now has access to 60% of the network resources, and its downlink throughput rises to 78 Mbps. Next, at t = 40s, Slice 1 gains active users, and at the same time, owing to a change in network policy, the FSM xApp assigns 80% of the available resources to Slice 1. Predictably, from FIG. 12B, it may be seen that there is a rise in throughput for Slice 1 and a fall for Slice 3. Then, at t = 60s, Slice 3 too gains active users and transitions from the idle state. Since Slice 3 was prioritized previously, it now moves to the shared state, albeit with a target throughput of 52 Mbps as before. However, at this point, both Slice 2 and Slice 3 are sharing the same shared pool having only 20% of the total resources. With a 10% resource assignment, Slice 2 is not able to meet its target throughput, resulting in a congestion-induced spike in its RTTs. These results indicate the importance of the dedicated state. The ability to switch to the dedicated mode is ideal for critical use cases, such as public safety networks during emergencies, thereby guaranteeing a minimum level of performance that is isolated from changing network conditions. Once the emergency scenario is over, these slices can be switched back to the prioritized mode in the interest of resource efficiency. This example also showcases the performance isolation inherent within FlexiSLICE, with Slices 1 and 3 being unaffected by the congestion in Slice 2.

Various example embodiments of the programmable RAN slicing framework may be configured to provide various advantages or potential advantages.

For example, various example embodiments of the programmable RAN slicing framework may be configured to support a comprehensive RAN slicing framework enabling flexible and customizable RAN slicing capabilities that enable customized functionality and network operations which are capable of supporting various individual use cases such as enhanced mobile broadband (eMBB), ultra-reliable low latency communications (URLLC), massive IoT (MIoT), industrial communications (e.g., factories, mining, or the like), vehicular communications (e.g., Vehicle-to-Everything (V2X) communications or other suitable vehicular communications), reality-related applications (e.g., virtual reality (VR), augmented reality (AR), missed reality (MR), extensible reality (XR), or the like), or the like, as well as various combinations thereof. For example, various example embodiments of the programmable RAN slicing framework may be configured to support RAN slicing based on dynamic and flexible RAN slice characterizations (e.g., support dynamic resource configurations, NRM compliance, flexibility in resource scheduling, support for rapid variations in traffic and user mobility, support for dynamic slice customization capabilities in order to deliver use-case-specific requirements, or the like, as well as various combinations thereof). For example, various example embodiments of the programmable RAN slicing framework may be configured to support RAN slicing based on support for programmable use-case-driven control and assurance (e.g., enabling O-RAN service models to expose additional slice parameters that support dynamic and flexible RAN slice characterizations, service differentiation, or the like, as well as various combinations thereof). For example, various example embodiments of the programmable RAN slicing framework may be configured to support RAN slicing based on use of highly dynamic and flexible characterizations of RAN slices, treating them as pools of non-homogenous radio resources supporting various scopes of resource differentiation and service-specific scheduling mechanisms. For example, various example embodiments of the programmable RAN slicing framework may be configured to support RAN slicing based on use of a control system supporting slice programmability for control and assurance while also supporting non-homogenous radio resources and use-case-specific customization. For example, various example embodiments of the programmable RAN slicing framework may be configured to provide RAN slicing in manner driven by customer requirements and aligned with various functions of RAN base stations and RAN controllers.

For example, various example embodiments of the programmable RAN slicing framework may be configured to provide a highly-modular, programmable framework for RAN slicing, which can be integrated both within O-RAN-based systems as well as vendor proprietary systems. For example, various example embodiments of the programmable RAN slicing framework may be configured to provide a programmable network slicing framework, referred to herein as FlexiSLICE, which supports a slice-centric frequency domain scheduling mechanism within the base station along with a set of APIs that provide slice configuration and statistics capabilities, incorporates the FlexiSLICE Manager (FSM) O-RAN RAN function along with a supporting E2 service model, E2 Service Model - FlexiSLICE Manager (E2SM-FSM), and xApps for RAN-RIC interactions related to slicing, or the like, as well as various combinations thereof. For example, various example embodiments of the programmable RAN slicing framework may be configured to support use-case-specific RAN slice customization based on FlexiSLICE RAN slice characterization. For example, various example embodiments of the programmable RAN slicing framework may be configured to enable delivery of differentiated scheduling paradigms tailored to the specific services being served by a slice through the FlexiSLICE FD Scheduling Framework (FFSF). For example, various example embodiments of the programmable RAN slicing framework may be configured to support robust RAN slice programmability and control through the FlexiSLICE APIs, FlexiSLICE Manager (FSM) RAN Function, and FSM Mediation xApp.

Various example embodiments of the programmable RAN slicing framework may be configured to provide various other advantages or potential advantages.

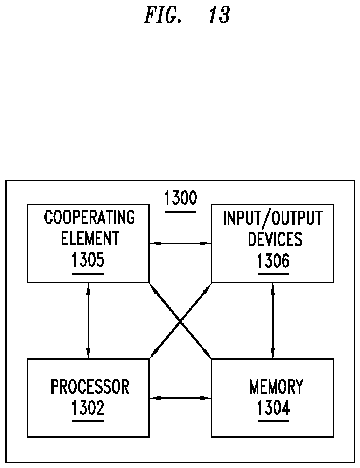

FIG. 13 depicts an example embodiment of a computer suitable for use in performing various functions presented herein.

The computer 1300 includes a processor 1302 (e.g., a central processing unit (CPU), a processor, a processor core of a processor, a subset of processor cores of a processor, a set of processor cores of a processor, or the like) and a memory 1304 (e.g., a random access memory (RAM), a read-only memory (ROM), or the like). **In** at least some example embodiments, the computer 1300 may include at least one processor and at least one memory storing instructions that, when executed by the at least one processor, cause the computer to perform various functions presented herein.

The computer 1300 also may include a cooperating element 1305. The cooperating element 1305 may be a hardware device. The cooperating element 1305 may be a process that can be loaded into the memory 1304 and executed by the processor 1302 to implement various functions presented herein (in which case, for example, the cooperating element 1305 (including associated data structures) can be stored on a non-transitory computer readable medium, such as a storage device or other suitable type of storage element (e.g., a magnetic drive, an optical drive, or the like)).

The computer 1300 also may include one or more input/output devices 1306. The input/output devices 1306 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1300 may represent a general architecture and functionality suitable for implementing functional elements described herein, portions of functional elements described herein, or the like, as well as various combinations thereof. For example, computer 1300 may provide a general architecture and functionality that is suitable for implementing one or more elements presented herein, such as a controller or a portion thereof, a base station or a portion thereof, or the like.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").
It will be appreciated that, although various embodiments which incorporate the teachings presented herein have been shown and described in detail herein, those skilled in the art can readily devise many other varied embodiments that still incorporate these teachings.

## Claims

1. An apparatus (1300, 205), comprising:
means for exchanging (1110), by a base station (205) of a radio access network (110, 200) with a controller (203) of the radio access network (110, 200), messages related to configuration of a set of network slices (211) on the base station (205);
means for maintaining (1120), by the base station (205), network slice configuration information for the set of network slices (211), wherein the network slice configuration information includes, for each network slice (211) in the set of network slices (211), a respective set of network slice parameters for the respective network slice (211) that includes an operational state (300) of the respective network slice (211), a radio resource configuration of the respective network slice (211) that is based on the operational state (300) of the respective network slice (211), and a slice-specific scheduling algorithm of the respective network slice (211); and
means for performing (1130), by the base station (205) based on the network slice configuration information for the set of network slices (211), slice-aware allocation of frequency domain resources of the radio access network (110, 200) to a set of user equipments (201) associated with the base station (205).

2. The apparatus (1300, 205) of claim 1, further comprising
means for supporting, by the base station (205) for at least one of the network slices (211) based on one or more control messages from the controller (203), configuration of the respective set of network slice parameters for the network slice (211) to meet a set of requirements of a use case served by the radio access network (110, 200).

3. The apparatus (1300, 205) of claim 1, wherein the operational state of the respective network slice (211) is based on a set of operational states (300) supported for the set of network slices (211), wherein the set of operational states (300) includes an idle state, a dedicated state, a prioritized state, a shared state, and a hybrid state.

4. The apparatus (1300, 205) of claim 3, wherein the radio resource configuration of the respective network slice (211) is based on the operational state of the respective network slice (211), wherein:
the respective network slice (211) is in the dedicated state (302) and the radio resource configuration includes an indication of a quantity of radio resources dedicated to the respective network slice (211);
the respective network slice (211) is in the prioritized state (303) and the radio resource configuration includes an indication of a quantity of radio resources to which the respective network slice (211) has priority access;
the respective network slice (211) is in the shared state (304) and the radio resource configuration includes an indication of a shared priority parameter indicative of a priority level of the respective network slice (211) for access to a shared pool of radio resources; or
the respective network slice (211) is in the hybrid state (305) and the radio resource configuration includes a dedicated radio resource configuration indicative of a quantity of radio resources dedicated to the respective network slice (211), a prioritized radio resource configuration indicative of a quantity of radio resources to which the respective network slice (211) has priority access, and a shared priority parameter indicative of a priority level of the respective network slice (211) for access to a shared pool of radio resources.

5. The apparatus (1300, 205) of claim 1, wherein the slice-specific scheduling algorithm of the respective network slice (211) includes one of a proportional fair scheduling algorithm, a round robin scheduling algorithm, or a maximum throughput scheduling algorithm.

6. The apparatus (1300, 205) of claim 1, wherein, for each network slice (211) in the set of network slices (211), the respective set of network slice parameters for the respective network slice (211) further includes at least one of an indication of a radio access technology of the respective network slice (211) or a set of radio access network level user plane associations for the respective network slice (211).

7. The apparatus (1300, 205) of claim 1, wherein, for at least one of the network slices (211) in the set of network slices (211), the operational state of the respective network slice (211) is based on an event-driven network slice state machine (300) supporting:
an idle state (301) in which the respective network slice (211) does not have any data radio bearers assigned thereto;
a dedicated state (302) in which the respective network slice (211) has a set of dedicated radio resources assigned thereto;
a prioritized state (303) in which the respective network slice (211) has priority access to a set of radio resources assigned to the respective network slice (211) and unused ones of the radio resources assigned to the respective network slice (211) are allocated to a shared pool of radio resources;
a shared state (304) in which the respective network slice (211) does not have an explicit assignment of radio resources and has access to a shared pool of radio resources based on a priority of the respective network slice (211); and
a hybrid state (305) in which the respective network slice (211) includes a dedicated radio resource configuration, a prioritized radio resource configuration, and a shared priority parameter.

8. The apparatus (1300, 205) of claim 1, wherein the slice-aware allocation of frequency domain resources of the radio access network (110, 200) to the set of user equipments (201) of the radio access network (110, 200) is based on allocation of frequency domain resources to data radio bearers of the user equipments (201) based on the respective operational states of the respective network slices (211), the respective radio resource configurations of the respective network slices (211), and the respective slice-specific scheduling algorithms of the respective network slices (211).

9. The apparatus (1300, 205) of claim 1, wherein the slice-aware allocation of frequency domain resources of the radio access network (110, 200) to the set of user equipments of the radio access network (110, 200) is based on:
a first scheduling stage (420, 500), based on slice-specific scheduling of frequency domain resources to the user equipments (201), to provide a first resource allocation for the set of user equipments (201);
a second scheduling stage (430, 600), based on system-level scheduling of shared frequency domain resources to the user equipments (201), to provide a second resource allocation for the set of user equipments (201); and
a third scheduling stage (440) in which virtual resource blocks are assigned to data radio bearers of the user equipments (201) based on the first resource allocation for the set of user equipments (201) and the second resource allocation for the set of user equipments (201).

10. The apparatus (1300, 205) of claim 1, wherein, the means for performing slice-aware allocation of frequency domain resources of the radio access network (110, 200) to the set of user equipments (201) of the radio access network (110, 200) comprises:
means for determining, for each network slice (211) in the set of network slices (211), a respective set of data radio bearers of the set of user equipments (201) associated with the respective network slice (211); and
means for determining, for each user equipment (201) in the set of the user equipments (201) based on slice-aware scheduling based on the set of network slices (211), a respective set of virtual resource blocks assigned to the respective user equipment (201).

11. The apparatus (1300, 205) of claim 10, wherein, the means for determining, for each user equipment (201) in the set of the user equipments (201) based on slice-aware scheduling based on the set of network slices (211), the respective set of virtual resource blocks assigned to the respective user equipment (201), comprises:
means for determining (420, 500), for each network slice (211) in a first subset of network slices (211) that includes ones of the network slices (211) in a dedicated state (302), a prioritized state (303), or a hybrid state (304), a first resource allocation indicative of a respective number of radio bearers to allocate to each data radio bearer associated with the respective network slice (211);
means for determining (430, 600), for each network slice (211) in a second subset of network slices (211) including ones of the network slices (211) in the hybrid state (304) or a shared state (305), a second resource allocation indicative of a number of radio bearers to allocate to each data radio bearer associated with the respective network slice (211); and
means for determining (440), for each user equipment (201) in the set of the user equipments (201) based on the first resource allocation and the second resource allocation, allocation of the respective set of virtual resource blocks to the respective user equipment (201).

12. The apparatus (1300, 205) of claim 11, wherein the means for determining the first resource allocation is based on respective slice-specific scheduling algorithms applied for the respective ones of the network slices (211) in the first subset of network slices (211), wherein the means for determining the second resource allocation is based on a system-level scheduling algorithm applied for the ones of the network slices (211) in the second subset of network slices (211).

13. The apparatus (1300, 205) of claim 11, wherein the means for determining (420, 500) the first resource allocation, comprises:
means for determining, for each network slice (211) in the first subset of network slices (211) based on the respective slice-specific scheduling algorithm of the respective network slice (211) and the respective radio resource configuration of the respective network slice (211), the number of radio bearers to allocate to each data radio bearer associated with the respective network slice (211) up to a maximum value for the respective network slice (211) that is constrained by a sum of dedicated resources and prioritized resources associated with the respective network slice (211); and
means for outputting a list of the data radio bearers of the user equipments (201) having radio bearers assigned thereto along with the respective numbers of radio bearers allocated to the respective data radio bearers of the user equipments (201) and a list of data radio bearers of the user equipments (201) without any radio bearers assigned thereto.

14. A non-transitory computer readable medium storing computer program instructions which, when executed by an apparatus (1300, 205), cause the apparatus (1300, 205) at least to:
exchange (1110), by a base station (205) of a radio access network (110, 200) with a controller (203) of the radio access network (110, 200), messages related to configuration of a set of network slices (211) on the base station (205);
maintain (1120), by the base station (205), network slice configuration information for the set of network slices (211), wherein the network slice configuration information includes, for each network slice (211) in the set of network slices (211), a respective set of network slice parameters for the respective network slice (211) that includes an operational state of the respective network slice (211), a radio resource configuration of the respective network slice (211) that is based on the operational state of the respective network slice (211), and a slice-specific scheduling algorithm of the respective network slice (211); and
perform (1130), by the base station (205) based on the network slice configuration information for the set of network slices (211), slice-aware allocation of frequency domain resources of the radio access network (110, 200) to a set of user equipments (201) associated with the base station (205).

15. A method, comprising:
exchanging (1110), by a base station (205) of a radio access network (110, 200) with a controller (203) of the radio access network (110, 200), messages related to configuration of a set of network slices (211) on the base station (205);
maintaining (1120), by the base station (205), network slice configuration information for the set of network slices (211), wherein the network slice configuration information includes, for each network slice (211) in the set of network slices (211), a respective set of network slice parameters for the respective network slice (211) that includes an operational state of the respective network slice (211), a radio resource configuration of the respective network slice (211) that is based on the operational state of the respective network slice (211), and a slice-specific scheduling algorithm of the respective network slice (211); and
performing (1130), by the base station (205) based on the network slice configuration information for the set of network slices (211), slice-aware allocation of frequency domain resources of the radio access network (110, 200) to a set of user equipments (201) associated with the base station (205).
